# EUROPÄISCHE PATENTSCHRIFT

(11) **EP 2 981 051 B1**
(45) Veröffentlichungstag und Bekanntmachung des Hinweises auf die Patenterteilung: **01.11.2017**
(21) Anmeldenummer: 14179363.8
(22) Anmeldetag: 31.07.2014
(51) Int. Cl.: H04M 1/22, H04M 1/247, H04M 1/725, H04W 4/02, H04M 1/57

(54) **Unterstützung bei der Rufnummerneingabe mittels einer Tastatur**
Assistance in the input of telephone numbers by means of a keyboard
Assistance lors de la saisie d'un numéro d'appel à l'aide d'un clavier

(43) Veröffentlichungstag der Anmeldung: 03.02.2016
(73) Patentinhaber: Deutsche Telekom AG, 53113 Bonn (DE)
(72) Erfinder: Thies, Emil, 47166 Duisburg (DE)
(74) Vertreter: Brandt & Nern Patentanwälte

(56) Entgegenhaltungen:
- DE-U1-202005 022 012
- US-A1- 2004 198 455
- US-A1- 2012 176 333
- US-B1- 6 289 226

## Beschreibung

Die Erfindung bezieht sich auf das technische Gebiet der Telekommunikation. Sie betrifft eine Lösung zur Unterstützung bei der Eingabe einer Rufnummer in ein Endgerät mittels einer Tastatur. Die vorgestellte Lösung unterstützt den Nutzer bei der Eingabe einer gültigen Rufnummer, ohne jedoch zwingend auch die Eingabe ungültiger Rufnummern zu unterbinden. Im Fokus dieser Lösung steht die Unterstützung von Nutzern telekommunikativer Endgeräte, bei der Eingabe von Rufnummern insbesondere zum Zweck des Telefonierens oder des Versendens einer Fax-Nachricht. Jedoch ist die Lösung hierauf nicht beschränkt, sondern ist grundsätzlich auch für andere Anwendungen einsetzbar, welche die Eingabe einer Telefon- und/oder Fax-Rufnummer erfordern. Zu denken ist hierbei beispielsweise an mittels eines Smartphones ausführbare Miniprogrammanwendungen, so genannte Apps, welche für unterschiedlichste Zwecke bei ihrer Nutzung die Eingabe mindestens einer Rufnummer erfordern.

Auch im Zusammenhang mit der Aufnahme von Rufnummern in ein durch ein Endgerät verwaltetes Adressbuch ist eine Verwendung der vorgeschlagenen Lösung bei entsprechender Ausbildung des betreffenden Endgerätes denkbar. Die Erfindung hat ein entsprechendes Verfahren und ein zur Durchführung dieses Verfahrens geeignetes Endgerät zum Gegenstand. Im Hinblick auf die Verwendung des Begriffs beziehungsweise der Formulierung Tastatur sei an dieser Stelle ausdrücklich betont, dass sich die Erfindung sowohl auf physisch ausgebildete Tastaturen, wie beispielsweise mechanische Tastaturen von Telefonendgeräten oder Faxgeräten oder Tastaturen mit Sensortasten, wie auch auf virtuelle Tastaturen bezieht, welche dem Nutzer eines entsprechenden Endgerätes eine Tastatureingabe über eine auf einem berührungsempfindlichen Display des Gerätes dargestellte Tastatur ermöglichen.

Für die Unterstützung von Nutzern bei an elektronischen Geräten mittels einer Tastatur vorzunehmenden Eingaben sind bereits unterschiedliche Lösungen bekannt geworden. Im Bereich der Telefonie, also im Zusammenhang mit der Verwendung von Telefonendgeräten, welche über ein in einem Speicher des Endgerätes gehaltenes Adressbuch verfügen, ist es bekannt, dem Nutzer einen entsprechenden Adressbucheintrag auf einem Display des Gerätes zu präsentieren, wenn eine von ihm eingegebene Rufnummer exakt mit der für diesen Adressbucheintrag hinterlegten Rufnummer übereinstimmt. Eine entsprechende Unterstützung wird durch die meisten am Markt befindlichen Mobilfunkgeräte und Smartphones, aber auch durch Endgeräte der Festnetztelefonie bereitgestellt.

Das Festnetztelefon Cisco IP Phone 7961 (Cisco ist eine eingetragene Marke der Cisco Systems, Inc. in San José, USA) unterstützt einen Benutzer beispielsweise dadurch, dass es bei der Eingabe einer Rufnummer nach jeder Eingabe einer Ziffer in einem Display eine Liste von mittels des Gerätes bereits angerufenen Rufnummern anzeigt, deren Anfangs- oder vollständige Ziffernfolge mit der jeweils eingegebenen Ziffernfolge übereinstimmt. Hierbei kann der Nutzer zudem, ohne die vollständige Rufnummer eingeben zu müssen, mittels entsprechender Pfeiltasten zu einem Eintrag der ihm jeweils dargebotenen Anruferliste navigieren und diesen für einen Rufaufbau zu der entsprechenden Rufnummer auswählen. Eine Unterstützung wird dem Nutzer dabei aber nur bei der Eingabe solcher Rufnummern zuteil, die bereits in der vorgenannten Liste erfasst sind, zu denen also früher bereits eine Verbindung aufgebaut wurde, zumindest aber versucht wurde eine Verbindung aufzubauen.

Eine vergleichbare Lösung wird durch die DE 20 2005 022 012 U1 offenbart. Gemäß der in dieser Druckschrift beschriebenen Lösung zur Unterstützung des Nutzers eines telekommunikativen Endgeräts wird nach jeder durch den Nutzer getätigten Zifferneingabe die bis dahin eingegebene Ziffernfolge mit Einträgen einer in einem Speicher des Endgeräts gehaltenen Telefonnummerndatenbank verglichen. Alle dabei ermittelten, mit der eingegebenen Ziffernfolge beginnenden Einträge werden dem Nutzer zur Auswahl auf einem Display präsentiert.

Darüber hinaus offenbart auch die US 2012/017633 A1 eine ähnliche Lösung. Entsprechend dieser Lösung werden dem Nutzer in Abhängigkeit seiner jeweils an einem berührungsempfindlichen Display getätigten Eingabe und eines daraus resultierenden Betriebszustandes des Endgerätes Rufnummern zuletzt ausgegangener und empfangener Anrufe oder mit einer von ihm eingegebenen Ziffernfolge übereinstimmende Rufnummern aus einem in dem Endgerät gespeicherten Telefonbuch zur Auswahl angeboten.

Alle zuvor beispielhaft beschriebenen Lösungen setzen demnach jeweils das Bestehen entsprechender Einträge, nämlich von Einträgen entweder in einem Adressbuch des Endgerätes oder in einem Speicher zuletzt angerufener Rufnummern, voraus. Bei der Anwahl von Rufnummern, welche durch das Endgerät bisher nicht erfasst wurden, erhält der Nutzer hingegen keine Unterstützung.

Aus der Druckschrift EP 2 530 917 A2 ist eine Lösung bekannt geworden, nach welcher im Falle der Eingabe einer Rufnummer in ein Telefonendgerät in Abhängigkeit des augenblicklichen lokalen Aufenthaltsortes seines Nutzers die eingegebene Telefonnummer auf ihre Verwendbarkeit überprüft und diese verneinendenfalls beispielsweise durch Hinzufügen einer Landesvorwahlnummer korrigiert wird.

Darüber hinaus ist aus der US 7,664,597 B2 eine Lösung für eine adaptive Tastatur bekannt geworden, gemäß welcher bei der Adresseingabe an einem Navigationsgerät nach jeder Eingabe eines Buchstabens eine insoweit reduzierte Tastatur auf dem Display ausgegeben wird, als dass diese nur noch die nach der Eingabe des betreffenden Buchstabens zur Eingabe einer existierenden Ortsangabe verwendbaren Buchstaben angezeigt werden.

Die beiden zuletzt dargestellten Lösungen basieren, wie auch weitere, mit ihnen vergleichbare Lösungen, auf einem Vergleich entweder der vollständigen Ziffernfolge einer Rufnummer oder der aktuell eingegebenen Zeichenfolge mit den Einträgen in einer Datenbank. Sofern aber der Nutzer eines Endgerätes bei der Eingabe von Rufnummern dahingehend unterstützt werden soll, dass er in Verbindung mit jeder Betätigung einer Taste durch eine entsprechende Signalisierung zur Eingabe einer gültigen Rufnummer geführt wird, unabhängig davon, ob diese Rufnummer in seinem Endgerät bereits gespeichert ist oder ob die betreffende Rufnummer zwar eine gültige, jedoch nicht vergebene Rufnummer darstellt, wäre zu diesem Zweck in dem Endgerät eine vergleichsweise große Datenbank zu hinterlegen, die alle grundsätzlich theoretisch möglichen nationalen und internationalen Rufnummern enthält.

Jedoch stellen die lokale Verwaltung einer solch großen Datenbank und deren Verwendung zum Zweck der Eingabeunterstützung mit dem Ziel einer weitgehenden Vermeidung von Eingabefehlern hohe Anforderungen an die Hardware, welche insbesondere die Hardware mobiler Endgeräte möglicherweise überfordern könnten. Wird nun andererseits die Möglichkeit in Betracht gezogen, die umfangreiche Datenbank außerhalb des Gerätes zu halten und diese mittels des Gerätes, für jeden durchzuführenden Vergleich beispielsweise jeweils über das Internet anzusprechen, dürfte im Hinblick auf die für die Übertragung der erforderlichen Daten benötigte Übertragungsdauer eine gewissermaßen in Echtzeit, das heißt unmittelbar während der Eingabe der einzelnen Zeichen einer Rufnummer erfolgende Prüfung kaum möglich sein.

Gemäß einer aus der US6,289,226 B1 bekannten Lösung wird der Nutzer eines telekommunikativen Endgerätes bei der Rufnummerneingabe dadurch unterstützt, dass eine als Teil einer Rufnummer von ihm eingegebene Ziffernfolge auf einem Display des Gerätes in einem in seinem Land üblichen Format angezeigt wird. Jeweils nach der Eingabe einer Ziffer wird dabei die momentan eingegebene Ziffernfolge einem Syntaxanalysator (Parser) zugeführt, welcher diese Ziffernfolge mit einem in einem Speicher des Gerätes abgelegten Nummernplan vergleicht und sie gegebenenfalls zur Ausgabe auf dem Display entsprechend den Vorgaben eines Formatangaben enthaltenden Gerätespeichers durch Hinzufügen von Klammern, eines Schrägstriches oder eines Bindestriches entsprechend dem üblichen Landesformat strukturiert.

Ferner wird in der US 2004/0198455 eine Lösung beschrieben, gemäß welcher die Teile eines mobilen Kommunikationsendgerätes mittels entsprechender LEDs unterschiedlich beleuchtet werden. Je nach Betriebszustand oder in Abhängigkeit einer Gruppe, welcher ein für die Kommunikation ausgewählter Telefoneintrag beziehungsweise Adressbuch zugeordnet ist, werden dabei insbesondere verschiedene Tasten einer Tatstatur des Gerätes oder die gesamte Tastatur mit Licht unterschiedlicher Farbe unterlegt.

Aufgabe der Erfindung ist es, die vorgenannten Nachteile und Probleme zu beseitigen beziehungsweise zu lösen. Dazu soll eine Lösung bereitgestellt werden, welche einen Nutzer bei der Eingabe von Rufnummern mittels einer Tastatur dahingehend unterstützt, dass er nach jeder Betätigung einer Taste, insbesondere nach jeder Zifferneingabe ein Feedback darüber erhält, ob die jeweils letzte Tasteneingabe grundsätzlich noch zu einer gültigen Rufnummer führen kann oder nicht. Der Nutzer eines Endgerätes soll dadurch bei der Eingabe einer Rufnummer mittels der Tastatur möglichst vor Eingabefehlern bewahrt werden. Die hierfür zu schaffende Lösung soll so ausgelegt sein, dass sie eine flüssige Bedienung des bei ihrer Umsetzung verwendeten beziehungsweise des zur Umsetzung der Lösung ausgebildeten Endgerätes auch dann ermöglicht, wenn das betreffende Endgerät in Bezug auf den zur Verfügung gestellten Speicherplatz und/oder seine Rechenleistung eher durchschnittlich ausgestattet ist. Hierzu sind ein Verfahren und ein entsprechendes Endgerät anzugeben.

Die Aufgabe wird durch ein Verfahren mit den Merkmalen des Patentanspruchs 1 gelöst. Ein die Aufgabe lösendes Endgerät ist durch die Merkmale des ersten unabhängigen Sachanspruchs charakterisiert. Vorteilhafte Aus- und Weiterbildungen der Erfindung sind durch die entsprechenden Unteransprüche gegeben.

Gemäß dem zur Lösung der Aufgabe vorgeschlagenen Verfahren wird der Nutzer eines dazu ausgebildeten, mit einer Verarbeitungseinheit und einem Programmspeicher ausgestatteten Endgerätes bei einer über eine Tastatur des Endgerätes erfolgenden Eingabe einer Rufnummer dadurch unterstützt, dass zumindest nach jeder Betätigung einer Zifferntaste der vorgenannten Tastatur zumindest bestimmte Zifferntasten dieser Tastatur in geeigneter Weise, für den Nutzer wahrnehmbar hervorgehoben werden. Dabei werden je nach Ausgestaltung des Verfahrens entweder nur diejenigen Zifferntasten, deren Betätigung zusammen mit der oder den bereits zuvor erfolgten Zifferneingaben eine Eingabeziffernfolge erzeugt, welche entsprechend eines zumindest Landesnetzkennzahlen (Landesvorwahlen) und Ortsnetzkennzahlen (Ortsnetzvorwahlen) berücksichtigenden Nummernplanes eine gültige Rufnummer oder einen Anfangsteil einer solchen gültigen Rufnummer darstellt (positive Logik), hervorgehoben oder aber nur die, deren Betätigung nicht zu einer gültigen Rufnummer führen kann (negative Logik).

Auch wenn zuvor und in den Patentansprüchen davon gesprochen wird, dass bestimmte Zifferntasten hervorgehoben werden, schließt dies selbstverständlich aber auch den Fall ein, dass aus tatsächlicher Sicht nach der Betätigung einer Zifferntaste keine Zifferntaste hervorgehoben wird, nämlich dann, wenn im Falle der positiven Logik keine weitere Zifferneingabe mehr zu einer gültigen Rufnummer führt (beispielsweise weil die größtmögliche Länge für eine Rufnummer in einer bestimmten Rufnummerngasse erreicht ist) oder, wenn im Falle der negativen Logik alle Zifferneingaben auf dem Weg zur Eingabe einer zulässigen Rufnummer möglich bleiben.

Grundsätzlich ist es - zumindest, soweit das Verfahren nur zur Hervorhebung bestimmter Zifferntasten der Tastatur ausgelegt ist - eigentlich egal, ob diejenigen Tasten hervorgehoben werden deren Betätigung zu einer gültigen Rufnummer führen kann oder gerade diejenigen die dies nicht ermöglichen. Aus psychologischer Sicht, ist es aber zu bevorzugen, diejenigen Tasten hervorzuheben, deren Betätigung zur Eingabe einer gültigen Rufnummer führen kann. Dies gilt insbesondere dann, wenn die betreffenden Tasten, wie gemäß einer vorgesehenen Ausbildungsform physische beziehungsweise mechanische Tasten sind, welche zum Zwecke des Hervorhebens einzeln beleuchtet werden. Daher stellen die nachfolgenden Erläuterungen, soweit nicht anders angegeben, im Allgemeinen darauf ab, dass vorzugsweise diejenigen Tasten hervorgehoben werden deren Betätigung den Nutzer zur Eingabe einer gültigen Rufnummer führt, ohne dass die Erfindung jedoch hierauf beschränkt wäre.
Für die Art und Weise der Hervorhebung von Tasten sind dabei unterschiedliche, später noch zu erläuternde Möglichkeiten gegeben, welche unter anderem davon abhängen können, welcher Art die zur Eingabe der Rufnummer verwendete Tastatur ist. Insoweit sei an dieser Stelle nochmals daran erinnert, dass sich die vorgestellte Lösung sowohl auf Endgeräte bezieht, deren für die Eingabe der Rufnummer verwendete Tastatur eine Tastatur mit physischen Tasten ist, als auch auf solche, bei denen diese Tastatur als virtuelle Tastatur ausgebildet ist.

Ferner sei an dieser Stelle darauf hingewiesen, dass das Verfahren vorzugsweise derart gestaltet ist, dass Eingaben, welche nicht zu einer gültigen Rufnummer führen können, dennoch möglich sind. Zwar ist es grundsätzlich auch möglich das Verfahren so auszulegen, dass Tasten, deren Betätigung nicht zu einer gültigen Rufnummer führen kann, zu sperren. Jedoch wird dies nicht präferiert.

Erfindungsgemäß wird zur Ermittlung der im Ergebnis der Betätigung einer Taste (das heißt zumindest im Ergebnis der Betätigung einer Zifferntaste) jeweils hervorzuhebenden Zifferntasten der hierfür zugrunde gelegte, bereits angesprochene Nummernplan als ein mehrstufiger Entscheidungsbaum in dem Endgerät abgebildet. Bei dem der Ermittlung der jeweils hervorzuhebenden Zifferntasten zugrunde gelegten Nummernplan handelt es sich erfindungsgemäß um einen Nummernplan, in welchem durch die International Telecommunication Union (ITU) für die Bildung gültiger Rufnummern festgelegte Regeln niedergelegt sind. Der diesen Nummernplan abbildende mehrstufige Entscheidungsbaum ist erfindungsgemäß als unmittelbarer Bestandteil einer in dem Programmspeicher des Endgerätes gehaltenen, durch dessen Verarbeitungseinheit verarbeitbaren Programmanwendung kodiert.

Hierbei macht es sich die Erfindung zunutze, dass es für die Bildung gültiger Rufnummern, anders als bei Ortsnamen, für deren Eingabe in ein Navigationsgerät ein entsprechendes Verfahren, wie bereits angegeben, in der US 7,664,597 B2 beschrieben wird, gewissermaßen festgelegte Regeln gibt. Diese Regeln sind in Nummernplänen niedergelegt, welche durch alle Staaten gegenüber der ITU bekanntgegeben und durch die ITU veröffentlicht werden.

Den angesprochenen Vorteil eines für die Bildung gültiger Rufnummern bestehenden Regelwerks nutzt die Erfindung dahingehend, dass eine jeweilige durch den Nutzer des Endgerätes durch Betätigung einer Zifferntaste gemachte Eingabe und die sich daraus ergebende aktuell eingegebene Ziffernfolge nicht gegen eine Datenbank geprüft werden muss, um die nächsten zur Eingabe einer gültigen Rufnummer möglichen (oder gegebenenfalls - gewissermaßen bei Auslegung mit einer negativen Logik gedacht - die hierfür nicht geeigneten) Zifferntasten zu ermitteln. Vielmehr wird der Nummernplan unmittelbar in einem Programmspeicher des Endgerätes in Form eines Entscheidungsbaumes abgebildet, welcher als Bestandteil einer in dem Programmspeicher gehaltenen und durch die Verarbeitungseinheit des Endgerätes bei der Durchführung des Verfahrens verarbeiteten Programmanwendung kodiert ist.

Selbst dann, wenn der besagte Nummernplan alle nationalen, durch die ITU veröffentlichten Nummernpläne der Länder vollständig umfasst, nimmt der angesprochene, als Teil der Programmanwendung kodierte Entscheidungsbaum eine Größe an, bei welcher die besagte Programmanwendung bei einer Verarbeitung mittels heute als Standard anzusehender Hardware und Prozessortechnik hoch performant bleibt. Dadurch, dass der Aufbau und die Speicherung einer relationalen Datenbank aufgrund der direkten Kodierung in der Programmanwendung unterbleibt, stellt auch der Speicherplatzbedarf an die Hardware keine überhöhten Anforderungen.

Im Hinblick auf den vorgenannten Entscheidungsbaum sei angemerkt, dass dieser Begriff üblicherweise im Zusammenhang mit Strukturen Verwendung findet, welche einen mehrstufigen, durch Regeln bestimmten Entscheidungsprozess abbilden. Hierbei bildet jede Regel, in deren Rahmen eine Entscheidung zu treffen ist, einen so genannten Knoten und jede mögliche Antwort auf eine solche Entscheidung ein so genanntes Blatt aus. Da insoweit aber auch Definitionen existieren, wonach ein Entscheidungsbaum wenigstens einen Knoten und mindesten zwei Blätter umfasst, wird im Patentanspruch 1 und bei der vorstehenden Darstellung der erfindungsgemäßen Lösung ausdrücklich von einem mehrstufigen Entscheidungsbaum ausgegangen. Grund dafür ist, dass der im Rahmen der Erfindung zu betrachtende Entscheidungsbaum einen Nummernplan mit gültigen Rufnummern abbildet, bei dessen Abarbeitung im Rahmen der in dem Programmspeicher des Endgerätes gehaltenen Programmanwendung zumindest sowohl eine Entscheidung darüber zu treffen ist, ob eine eingegebene Ziffernfolge eine gültige Rufnummerngasse auf der Ebene der Landeskennzahlen, also der internationalen Landesvorwahlen darstellt, als auch eine Entscheidung dazu, ob eine eine solche gültige Rufnummerngasse fortsetzende Ziffernfolge eine gültige Rufnummerngasse auf der Ebene der Ortsnetzkennzahlen, das heißt der nationalen Ortsvorwahlen bezeichnet. Soweit nachfolgend vereinfachend von einem Entscheidungsbaum gesprochen wird, ist daher stets ein mehrstufiger Entscheidungsbaum gemeint, welcher einen internationale Landesvorwahlen und nationale Ortsvorwahlen umfassenden Nummernplan abbildet.

Das Verfahren ist vorzugweise dadurch weitergebildet, dass in dem in Form des Entscheidungsbaumes abgebildeten Nummernplan und in den durch das Endgerät zu dem mit ihm assoziierten Netz verfügbar gemachten Kennzeichen Netzbetreiberkennzahlen berücksichtigt werden. Diese finden innerhalb des Entscheidungsbaumes Berücksichtigung auf der Ebene der insoweit mit ihnen gleichzusetzenden Ortsnetzkennzahlen. So bezeichnet beispielsweise auf der betreffenden Ebene des Entscheidungsbaumes beziehungsweise auf der betreffenden Ebene des Nummernplanes die Ziffernfolge "30" (mit der vorausgehenden Landesnetzkennzahl "0049" für Deutschland) die Ortsvorwahl von Berlin, wohingegen die Ziffernfolge "170" ein Mobilfunknetz der Anmelderin bezeichnet. Darüber hinaus kann es sich bei den genannten Netzbetreiberkennzahlen auch um Vorwahlnummern von CallByCall-Anbietern handeln.

In seiner zuvor beschriebenen grundsätzlichen Ausbildung ermöglicht das erfindungsgemäße Verfahren die Unterstützung eines Nutzers bei der Eingabe einer Rufnummer zumindest dann, wenn dieser eine Rufnummer stets komplett mit der Landes- und der Ortsvorwahl eingibt und zwar auch dann, wenn es sich bei der einzugebenden Rufnummer nicht um eine Rufnummer im Ausland oder außerhalb des Ortsnetzes handelt, welches den augenblicklichen Standort des Nutzers abdeckt. Jedoch ist es bei der Eingabe einer Rufnummer zum Zweck des Telefonierens üblich, die Netzkennzeichen beziehungsweise Vorwahlnummern wegzulassen, wenn diese entbehrlich sind.

Vorzugsweise ist daher das Verfahren noch dadurch weitergebildet, dass durch ein zu seiner Durchführung ausgebildetes Endgerät Kennzeichen beziehungsweise Angaben verfügbar gemacht werden, aus welchen die Landesnetzkennzahl und die Ortnetzkennzahl, mit welchen das für die Eingabe der Rufnummer genutzte Endgerät assoziiert ist, hergeleitet werden können. Mit den vorgenannten Angaben, also der Landesnetzkennzahl und der Ortsnetzkennzahl, ist das betreffende Endgerät insoweit assoziiert, als dass beispielsweise im Falle dessen, dass es sich bei diesem Gerät um ein Festnetztelefon handelt, diese den Standort des Gerätes beziehungsweise die Lokalisierung des Anschlusses, an dem das Endgerät betrieben wird, betreffen.

Da die Erfindung aber nicht nur im Zusammenhang mit Endgeräten verwendbar ist, welche selbst zur Anwahl eines Teilnehmeranschlusses durch die Eingabe einer Rufnummer dienen, sondern auch nutzbar ist mit Geräten, welche Anwendungen ausführen, bei denen die Eingabe einer Rufnummer nicht zum unmittelbaren Zweck des Telefonierens erforderlich ist, handelt es sich bei der Landesnetzkennzahl und der Ortsnetzkennzahl, welche aus den bereits genannten, durch das Endgerät verfügbar gemachten Kennzeichen oder Angaben herleitbar sind, nicht zwingend um Angaben zu einem Telekommunikationsnetz, in welchem das betreffende Endgerät selbst betrieben wird. Darüber hinaus können diese Angaben, beispielsweise bei einem Mobilfunkgerät, auch variabel sein. Im Falle von Mobilfunkgeräten wird dabei davon ausgegangen, dass Netzbetreiberkennzahlen, wie eine Mobilfunknetzvorwahl, der Ortsnetzkennzahl gleichzusetzen sind, also von dem schon angesprochenen Nummernplan und von dem durch das Endgerät verfügbar gemachten Kennzeichen auf der Ebene der Ortsnetzkennzahl umfasst sind.

Die Beschaffenheit der Kennzeichen und die Art und Weise, wie diese durch das Endgerät verfügbar gemacht werden, können sehr unterschiedlich sein. So enthalten zum Beispiel SIM-Karten von Mobilfunktelefonen eine Länderkennung, aus der die Landesnetzkennzahl, also die Landesvorwahl, unmittelbar ableitbar ist, sowie die eigene Rufnummer, welche die Ableitung der schon angesprochenen Netzbetreiberkennzahl in Gestalt eines nationalen Präfixes (Ortausscheidungsziffer) mit nachfolgender den Netzbetreiber eindeutig identifizierender Ziffernfolge, das heißt die Ableitung der Vorwahl des Mobilfunknetzes, in dem das Mobiltelefon betrieben wird, ermöglicht. An einem ortsfesten Anschluss betriebene Telefone, wie ISDN-Telefone oder Voice-over-IP-Telefone, machen die zur Ableitung der Landesnetzkennzahl und der Ortsnetzkennzahl erforderlichen Kennzeichen unter Rückgriff auf bei der Anschlusskonfiguration hinterlegte Angaben verfügbar. Darüber hinaus ist es, insbesondere für den schon angesprochenen Fall, dass es sich bei dem Endgerät um ein nicht selbst der Telefonie dienendes Gerät handelt, möglich, dass entsprechende Kennzeichen je nach Verkaufsregion als veränderliche Default-Werte herstellerseitig in dem Endgerät voreingestellt oder aus einem anderen, mit dem betreffenden Endgerät gekoppelten Gerät ausgelesenwerden.

In einer bevorzugten Ausgestaltung des Verfahrens werden die Zifferntasten, deren Betätigung zusammen mit den gegebenenfalls bereits zuvor zur Eingabe der Rufnummer erfolgten Zifferneingaben eine Ziffernfolge ergeben, welche eine vollständige gültige Rufnummer oder einen Teil davon darstellt (oder eben gerade nicht - negative Logik), in optischer Weise hervorgehoben. Soweit es sich bei der Tastatur des Endgerätes um eine virtuelle, mit Hilfe eines berührungsempfindlichen Displays realisierte Tastatur handelt, werden dabei beispielsweise die hervorzuhebenden Zifferntasten in einer anderen Farbe, mit einem stärkeren Kontrast oder in einer anderen geometrischen Form dargestellt.

Bei Tastaturen mit physisch ausgebildeten Tasten, also beispielsweise bei Zifferntasten als Bestandteil einer mechanischen Tastatur ist die positive Logik zu bevorzugen. Hierbei erfolgt das optische Hervorheben derjenigen Zifferntasten, welche bei Fortsetzung der Eingabe zu einer gültigen Rufnummer führen können, wie bereits zuvor erwähnt, vorzugsweise dadurch, dass die betreffenden Zifferntasten einzeln beleuchtet werden.

Im Falle eines mit einer virtuellen Tastatur in Form eines berührungsempfindlichen Display ausgestatteten Endgerätes, bei welchem diejenigen Zifferntasten optisch hervorgehoben werden, deren Betätigung zu einer Eingabeziffernfolge führt, die eine gültige Rufnummer oder einen Anfangsteil einer solchen gültigen Rufnummer darstellt, ist in Weiterbildung des erfindungsgemäßen Verfahren eine zusätzliche Möglichkeit für eine Unterstützung bei der Rufnummerneingabe vorgesehen. Hierbei wird die tastsensitive, das heißt die berührungsempfindliche Fläche der nicht zu einer gültigen Rufnummer führenden und daher nicht optisch hervorgehobenen virtuellen Zifferntasten, gesteuert durch die Programmanwendung, reduziert.

An dieser Stelle soll vorsorglich klargestellt werden, dass es sich bei den im Rahmen der beschriebenen Lösung als gültig angesehenen Rufnummern um Rufnummern handelt, die nach den in Form der durch die ITU veröffentlichten nationalen Nummernpläne niedergelegten Regeln für die Bildung gültiger Rufnummern an Teilnehmer vergeben werden können. Dies heißt indes nicht, dass unter jeder der insoweit als gültig angesehenen Rufnummern tatsächlich auch ein Teilnehmer erreichbar ist. So ist es beispielsweise möglich, dass eine Rufnummer nach den Nummernplänen der ITU zwar gültig ist, aber augenblicklich an keinen Teilnehmer vergeben ist. Auch sei an dieser Stelle nochmals darauf hingewiesen, dass eine Betätigung nicht hervorgehobener Tasten in Abhängigkeit der konkreten Verfahrensgestaltung, nicht zwingend verhindert wird.

Über die zuvor ausführlicher besprochenen Angaben zur Ableitung der Landesnetzkennzahl und der Ortsnetz- beziehungsweise Netzbetreiberkennzahl hinaus, ist es vorzugsweise auch vorgesehen, dass in dem Endgerät eine Angabe dazu hinterlegt ist, ob die Eingabe einer Rufnummer an diesem Gerät die Eingabe einer Ziffer zur Amtsholung erfordert. Das Verfahren ist hierbei so ausgestaltet, dass bei einem Endgerät, welches die Hinterlegung eines Kennzeichens ermöglicht, wonach vor der Eingabe einer Rufnummer die Eingabe eines Vorzeichens für eine Amtsholung (beispielsweise "Vornull") erforderlich ist, auch eine Überprüfung des Status dieses Kennzeichens bei der Abarbeitung des Entscheidungsbaumes vorgesehen ist.

In weiterer Ausgestaltung des erfindungsgemäßen Verfahrens können neben den Zifferntasten, deren Betätigung zu einer Eingabeziffernfolge führt, die eine gültige Rufnummer oder einen Anfangsteil einer solchen gültigen Rufnummer darstellt (positive Logik), in Abhängigkeit der zuvor bei der Eingabe einer Rufnummer betätigten Tasten weitere Tasten der zur Eingabe der Rufnummer genutzten Tastatur hervorgehoben werden. Hierbei handelt es sich um Tasten, deren Betätigung zu einer gültigen Rufnummer führen kann oder die Verwendung der eingegebenen Ziffernfolge als gültige Rufnummer ermöglicht. Bei einem zum Rufaufbau unter Verwendung der eingegebenen Rufnummer geeigneten Endgerät wird demgemäß die einen Rufaufbau auslösende Taste (Call-Taste beziehungsweise Anruftaste) hervorgehoben, sobald die aktuell eingegebene Ziffernfolge im Ergebnis des Durchlaufens des Entscheidungsbaumes als eine vollständige gültige Rufnummer erkannt wird.

Darüber hinaus kann es beispielsweise vorgesehen sein, dass in Abhängigkeit der bisher eingegebenen Ziffernfolge eine das Löschen der letzten Zifferneingabe ermöglichende Taste (Lösch- oder Delete-Taste) hervorgehoben wird. Dies kommt insbesondere dann in Betracht, wenn das Verfahren auf einem Endgerät, wie bevorzugt, in der Weise umgesetzt ist, dass zwar im Hinblick auf die Zifferntasten nur die zu einer gültigen Rufnummer führenden Zifferntasten hervorgehoben werden, aber auch die Betätigung der anderen, nicht hervorgehobenen Zifferntasten weiterhin möglich bleibt.

Entsprechend einer weiteren vorteilhaften Weiterbildung des erfindungsgemäßen Verfahrens ist es vorgesehen, dass bei einem mit einem Display ausgestatteten Endgerät Zusatzinformationen ausgegeben werden, welche aus über den Entscheidungsbaum zur Ermittlung hervorzuhebender Tasten erhaltenen Ergebnissen abgleitet werden. Bei diesen Informationen kann es sich zum Beispiel um die Angabe des Landes handeln, welches mit einer als Teil einer gültigen Rufnummer eingegebenen Landesnetzkennzahl beziehungsweise Landesvorwahl korrespondiert oder um den Namen des Ortes einer in entsprechender Weise eingegebenen Ortsnetzkennzahl.

Denkbar sind darüber hinaus aber auch Informationen der Art "zu kurze Landesvorwahl", "zu kurze Ortswahl", "zu kurze Rufnummer", "ungültige Landesvorwahl" oder dergleichen. Angaben der letztgenannten Art sind in vergleichbarer Weise zudem im Hinblick auf eine falsch eingegebene Ortsnetzkennzahl oder eine falsch eingegebene Rufnummer insgesamt denkbar.

Ein zur Lösung der Aufgabe ausgebildetes Endgerät weist zumindest eine Verarbeitungseinheit, einen Programmspeicher und eine mindestens Zifferntasten zur Eingabe einer Rufnummer umfassende (physische beziehungsweise mechanische oder virtuelle) Tastatur auf. Das Gerät ist dabei, dem Grundprinzip des beschriebenen Verfahrens folgend, so ausgebildet, dass zumindest nach jeder zum Zweck der Eingabe einer Rufnummer erfolgenden Betätigung einer Zifferntaste der vorgenannten mindestens einen Tastatur zumindest bestimmte Zifferntasten hervorgehoben werden, nämlich entweder nur diejenigen Zifferntasten, deren Betätigung zusammen mit den bereits zuvor zur Eingabe der Rufnummer erfolgten Zifferneingaben eine Eingabeziffernfolge erzeugt, die entsprechend eines Nummernplanes eine gültige Rufnummer oder den Anfangsteil einer solchen gültigen Rufnummer darstellt, oder aber nur diejenigen Zifferntasten, deren Betätigung nicht zu einer gültigen Rufnummer führt.

Erfindungsgemäß ist in dem Programmspeicher des betreffenden Endgerätes eine von dessen Verarbeitungseinheit verarbeitbare Programmanwendung gehalten, in welcher als unmittelbarer Bestandteil ein Entscheidungsbaum kodiert ist, der den vorgenannten Nummernplan mit den darin niedergelegten Regeln der ITU zur Bildung gültiger Rufnummern abbildet. Die in dem Arbeitsspeicher des Endgerätes gehaltene Programmanwendung, welche den Entscheidungsbaum zur Abbildung des Nummernplanes umfasst, ist dabei derart gestaltet, dass der genannte Entscheidungsbaum bei jeder zur Eingabe einer Rufnummer erfolgenden Betätigung einer Taste der dafür vorgesehenen mindestens einen Tastatur (das zumindest bei jeder Betätigung einer Zifferntaste dieser Tastatur) zumindest zur Ermittlung der jeweils hervorzuhebenden Zifferntasten durchlaufen wird.

Vorzugsweise ist das zuvor beschriebene Endgerät zudem so ausgebildet, dass durch dieses Kennzeichen verfügbar gemacht werden, aus welchen die Landesnetzkennzahl und die Ortsnetzkennzahl des Netzes ableitbar ist, mit welchem das für die Eingabe der Rufnummer genutzte Endgerät assoziiert ist. Zu den insoweit möglichen Kennzeichen wurden Beispiele bereits im Zusammenhang mit der Beschreibung des erfindungsgemäßen Verfahrens gegeben.

Ein mit physischen Tasten, also insbesondere mit einer mechanischen Tastatur ausgestattetes erfindungsgemäßes Endgerät zeichnet sich dadurch aus, dass zumindest die Zifferntasten seiner mindestens einen zur Eingabe einer Rufnummer dienenden Tastatur als einzeln beleuchtbare Tasten ausgebildet sind. Hierbei wird die Beleuchtung der jeweils hervorzuhebenden Zifferntasten durch die den Entscheidungsbaum zur Abbildung des Nummernplanes für gültige Rufnummern umfassende Programmanwendung gesteuert.

Bei Endgeräten, deren Tastatur als Kombination einer mechanischen Tastatur mit einem dynamisch veränderlichen Tastaturlayout ausgebildet ist, kann die in dem Programmspeicher des erfindungsgemäßen Endgerätes gehaltene Programmanwendung so gestaltet sein, dass zur Hervorhebung der weiterhin zu einer gültigen Rufnummer führenden Zifferntasten gewissermaßen die Beschriftung der beispielsweise jeweils mit einem kleinen LCD-Display versehenen Tasten dynamisch verändert wird.

Darüber hinaus kann das Endgerät, unabhängig davon, ob dessen die Eingabe einer Rufnummer ermöglichende Tastatur als physische Tastatur oder als virtuelle Tastatur ausgebildet ist, so weitergebildet sein, dass die hervorzuhebenden Zifferntasten und weitere gegebenenfalls hervorzuhebende Tasten dem Nutzer des Endgerätes ein haptisches Feedback geben. Entsprechendes ist nach dem Stand der Technik auch bei durch berührungsempfindliche Displays realisierten virtuellen Tastaturen möglich.

Aspekte der Erfindung sollen nachfolgend in der Art von Ausführungsbeispielen anhand von Zeichnungen nochmals näher erläutert werden. Die Zeichnungen zeigen im Einzelnen:
- Fig. 1:: unterschiedliche Zustände einer Tastatur mit hervorhebbaren Tasten als Ergebnis des Versuchs der Eingabe einer Rufnummer;
- Fig. 2:: mögliche Zustände der Tastatur gemäß Fig. 1 bei einem anderen Eingabeverlauf;
- Fig. 3:: die Zustände der Tastatur nach Fig. 1 gemäß einem weiteren möglichen Eingabeverlauf;
- Fig. 4:: eine Abwandlung des Beispiels nach Fig. 3,
- Fig. 5:: Möglichkeiten der zusätzlichen Eingabeunterstützung bei einer virtuellen, mittels eines berührungsempfindlichen Displays realisierten Tastatur;
- Fig. 6:: die schematische Darstellung eines Entscheidungsbaumes zur Abbildung eines Nummernplans;
- Fig. 7:: den Ausschnitt eines Programmablaufplans
- Fig. 8 bis 13:: Codeauszüge für eine Möglichkeit der Umsetzung des Verfahrens in einer dessen wesentlichen Bestandteil ausbildenden Programmanwendung.

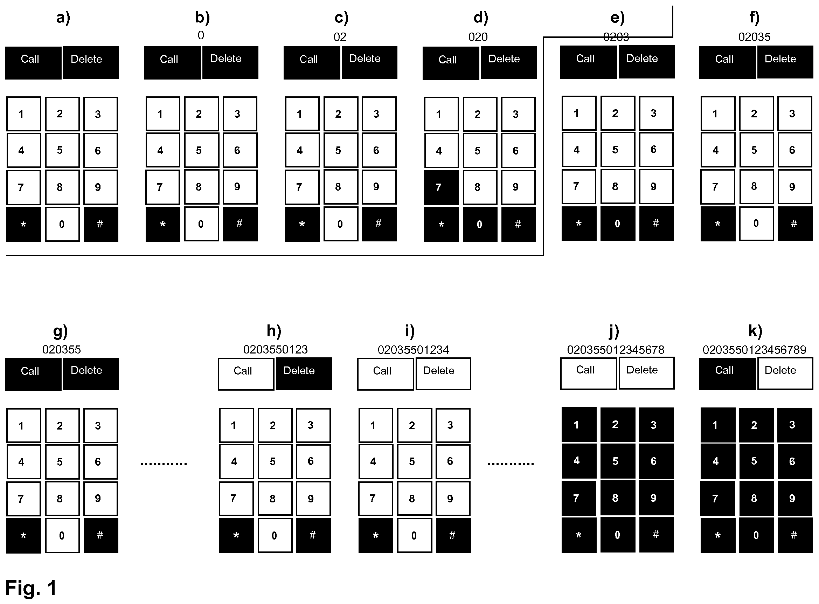

Die Fig. 1 zeigt anhand eines schematisch wiedergegebenen Tastaturlayouts unterschiedliche Zustände einer Tastatur eines in erfindungsgemäßer Weise ausgestalteten Endgerätes im Verlauf der Eingabe einer Rufnummer.

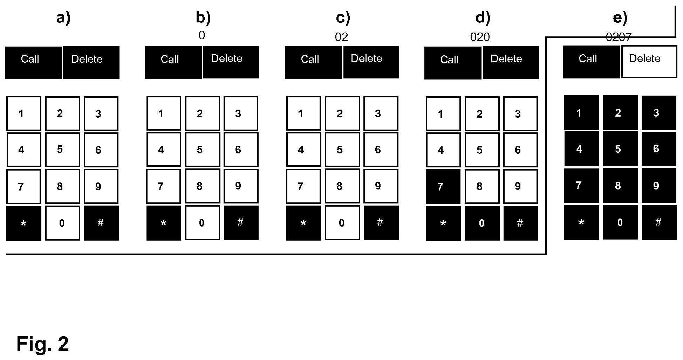

In der Fig. 1 und ebenso in den nachfolgenden Figuren 2 bis 4 wird dabei von einer Gestaltung des Verfahrens und einer damit korrespondierenden Ausbildung des Endgerätes ausgegangen, bei welcher diejenigen Tasten optisch hervorgehoben werden, welche gewissermaßen insoweit zulässig sind, als dass sie zur Eingabe oder zur Verwendung einer gültigen Rufnummer führen.

In der Darstellung sind hervorgehobene Tasten, deren Betätigung im Verlauf der Eingabe einer Rufnummer weiterhin zu einer gültigen Rufnummer führen kann, hell dargestellt, wohingegen die anderen Tasten, nämlich solche Tasten, deren Betätigung nicht zur Eingabe einer gültigen Rufnummer führen kann, dunkel dargestellt sind. Die Darstellung der Zustände der Tastatur bezieht sich auf ein Endgerät, welches so ausgebildet ist, dass für die im Programmspeicher des Endgerätes gehaltene Programmanwendung über das Endgerät Kennzeichen zugänglich sind, aus welchen sich unmittelbar ableiten lässt, dass das Endgerät in einem deutschen Netz betrieben wird. Demgemäß ist für innerhalb Deutschlands geführte Gespräche im Zuge der Eingabe der Rufnummer die Eingabe der Landesnetzkennzahl für Deutschland ("0049") entbehrlich.

Die bei dem beispielhaft gezeigten Tastaturlayout vorhandenen Tasten mit der Beschriftung "*" und "#" sind in allen von der Tastatur während der Eingabe einer Rufnummer eingenommenen Zuständen dunkel dargestellt, da die betreffenden Zeichen im deutschen Nummernplan kein Bestandteil einer gültigen Rufnummer sein können.

In dem unter a) dargestellten Ausgangszustand sind alle Zifferntasten hell dargestellt, also alle Zifferntasten hervorgehoben. Im Falle dessen, dass es sich bei der Tastatur um eine physische beziehungsweise mechanische Tastatur handelt heißt dies, dass alle Zifferntasten beleuchtet sind, da im Ausgangszustand jede der Taste zur Eingabe einer der Ziffern "0" bis "9" bei ihrer Betätigung zu einer gültigen Rufnummer führen kann.

Unter b) ist der Zustand der Tastatur nach der Eingabe einer "0", das heißt nach Betätigung der Zifferntaste für die "0" wiedergegeben. Auch nach der Eingabe einer "0" kann somit jede nachfolgend betätigte Zifferntaste noch zu einer gültigen Rufnummer nach dem deutschen Nummernplan führen. Dies gilt auch für die "0" selbst, da eine weitere Betätigung der Zifferntaste "0" der Eingabe einer Landesvorwahlnummer dienen kann.

Unter c) ist der Zustand der Tastatur im Anschluss an die Eingabe einer "2" nach der zuvor eingegebenen "0" dargestellt. Auch in diesem Zustand kann die Betätigung aller Zifferntasten noch zu einer gültigen Rufnummer führen.

Anders verhält es sich hingegen bei dem unter d) gezeigten Zustand, welcher den Zustand der Tastatur nach der Eingabe der Ziffernfolge "020" wiedergibt. Demnach können nach der zuletzt betätigten Zifferntaste "0" nachfolgend die Ziffern "7" und "0" nicht mehr zu einer gültigen Rufnummer führen.

Wird hiernach, wie unter e) wiedergegeben, die Zifferntaste "3" betätigt, so können mit Ausnahme der "0" nach dieser Zifferntaste alle anderen Zifferntasten noch zu einer gültigen Rufnummer führen. Dies hängt damit zusammen, dass die Ziffernfolge "0203" eine nach dem deutschen Nummernplan gültige Ortsnetzkennzahl, nämlich die Vorwahl von Duisburg darstellt, wobei die nachfolgende regionale Rufnummer nicht mit einer Ausscheidungsziffer, also einer weiteren "0", welche die Einleitung einer Orts- oder einer Landesvorwahl signalisiert, beginnen darf.

Folgt nun der zuvor eingegebenen "3" eine "5", ergibt sich der Zustand gemäß f), in welchem wiederum alle Zifferntasten zu einer gültigen Rufnummer führen können. Derselbe Zustand ergibt sich, wie unter g) gezeigt, wenn ein weiteres Mal die Zifferntaste "5" betätigt wird. Auch danach kann die Betätigung aller Zifferntasten zu einer gültigen Rufnummer führen, so dass alle Zifferntasten hervorgehoben, das heißt hell dargestellt sind.

Unter h) ist der Zustand der Tastatur gezeigt, nachdem insgesamt 10 Zifferntasten betätigt worden sind, deren Betätigung zu der Ziffernfolge "0203550123" geführt hat. In diesem Zustand kann die Betätigung aller Zifferntasten weiterhin zu einer gültigen Rufnummer führen, da Rufnummern im Duisburger Ortsnetz eine Mindestlänge von 6 Ziffern und eine Maximallänge von 11 Ziffern haben. Insoweit kann es sich bei der zum Zustand gemäß h) führenden Ziffernfolge bereits um eine gültige, das heißt vollständige Rufnummer innerhalb des Ortsnetzes Duisburg handeln. Daher wird in diesem Zustand der Tastatur neben den Zifferntasten außerdem die Call-Taste hervorgehoben, deren Betätigung zur Anwahl der zuvor eingegebenen Rufnummer führt.

Wird nun eine weitere Ziffer, wie beispielsweise die "4" eingegeben, ergibt sich der Zustand entsprechend i), gemäß welchem jede beliebige weitere Ziffer oder die Betätigung der Löschtaste ("Delete" - zum Löschen der zuletzt eingegebenen Ziffer) zu einer gültigen Rufnummer führen oder durch Betätigung der Anruftaste ("Call") ein Anruf unter Anwahl einer gültigen - jedoch nicht zwingend vergebenen Rufnummer eingeleitet werden kann. Im Falle des Betätigens der Löschtaste würde die Tastatur wider den Zustand gemäß h) einnehmen, bei der eine die Ortsvorwahl von Duisburg angebende Ziffernfolge mit einer für das Ortsnetz von Duisburg notwendigen Mindestlänge für eine Rufnummer vorliegt.

Sofern schließlich die eingegebene Ziffernfolge, wie unter j) gezeigt, mit der Ortsvorwahl von Duisburg beginnt und sich den diese Ortsvorwahl bezeichnenden Ziffern weitere 11 Ziffern anschließen, liegt eine Ziffernfolge vor, welche eine mögliche, das heißt zulässige Rufnummer mit einer für das Ortsnetz von Duisburg maximalen Länge darstellt. Folglich kann die Eingabe weiterer Ziffern nicht mehr zu einer gültigen Rufnummer führen. In diesem Zustand sind daher nur die Call-Taste zur Einleitung eines Anrufs unter Verwendung der eingegebenen Rufnummer "020355012345678" und die Delete-Taste hervorgehoben.

Ist hingegen bereits eine Ziffernfolge eingegeben worden, welche eine Rufnummer mit der Ortsvorwahl von Duisburg, aber mit einer über die maximale Länge von Rufnummern im Ortsnetz Duisburg hinausgehenden Länge bezeichnet, so handelt es sich hierbei nicht mehr um eine gültige Rufnummer. Folglich stellt sich der unter k) gezeigte Zustand ein, bei dem nur noch (die gegebenenfalls auch mehrmalige) Betätigung der Delete-Taste zu einer gültigen Rufnummer führen kann.

In der Fig. 2 sind mögliche Zustände einer der Tastatur der Fig. 1 entsprechenden Tastatur bei einem anderen Eingabeverlauf gezeigt. Die unter a) bis d) gezeigten Tastaturzustände entsprechen bei einem bis dahin identischen Eingabeverlauf den in der Fig. 1 gezeigten Tastaturzuständen a) bis d). Wird nun aber nach der bis dahin eingegebenen Ziffernfolge "020" die Zifferntaste "7" betätigt, obwohl diese bei dem unter d) gezeigten Zustand nicht hervorgehoben ist, führt dies zu einer ungültigen Ortsvorwahl. In Folge dessen ergibt sich der unter e) gezeigte Tastaturzustand, bei welchem lediglich die Delete-Taste hervorgehoben ist. Der Nutzer wird somit auf seine durch die Betätigung der Zifferntaste "7" gemachte Fehleingabe aufmerksam gemacht und darüber informiert, dass er diese durch Betätigung der Delete-Taste korrigieren kann. Darüber hinaus kann, wie bei der Erläuterung einer möglichen Weiterbildung des erfindungsgemäßen Verfahrens bereits ausgeführt, auf einem (hier nicht gezeigten) Display eine Information der Art "ungültige Ortsvorwahl" oder ähnlich ausgegeben werden. Der Nutzer wird indes nicht daran gehindert, seine insoweit als Fehleingabe anzusehende Eingabe, beispielsweise durch Betätigung weiterer Zifferntasten, fortzusetzen. Er wird also auf den Fehler lediglich aufmerksam gemacht.

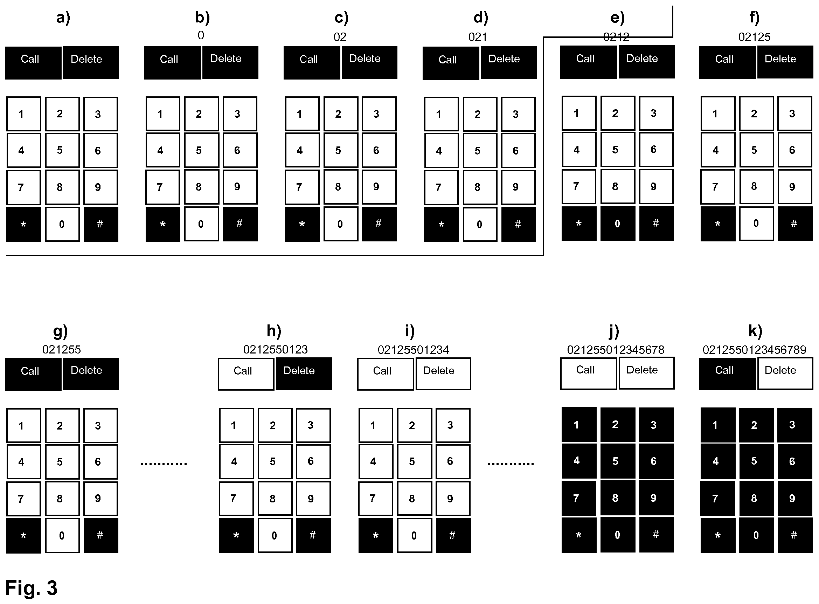

Ein weiterer möglicher Eingabeverlauf mit zugehörigen Tastaturzuständen bei einer bezüglich ihres Layouts der Tastatur nach den Figuren 1 und 2 entsprechenden Tastatur ist in der Fig. 3 gezeigt.

Die Tastaturzustände unter a) bis c) entsprechen wiederum den in der Fig. 1 gezeigten Zuständen a) bis c). Wird nun nach der Eingabe der Ziffernfolge "02" anstelle einer der unter d) gemäß Fig. 1 eigegebenen "0" eine "1" eingegeben, so führt dies zu dem in der Fig. 3 unter d) gezeigten Zustand. Anders als bei dem in der Fig. 1 gezeigten Beispiel ist demnach nach einem zu der Ziffernfolge "021" führenden Eingabeverlauf weiterhin die Betätigung aller Zifferntasten möglich beziehungsweise führt eine weitere Zifferneingabe unabhängig von der jeweils betätigten Zifferntaste in jedem Falle zu einer Ziffernfolge, welche weiterhin die Eingabe einer gültigen Rufnummer ermöglicht. Das heißt, in diesem Fall, nämlich nach Eingabe der Ziffernfolge "021", sieht der deutsche Rufnummernplan für alle Ziffern eine mögliche beziehungsweise gültige Nummerngasse vor. Es sei nochmals darauf hingewiesen, dass gemäß der hier erläuterten Verfahrensgestaltung dennoch ungültige Rufnummern eingegeben können und unter deren Verwendung die Call-Taste betätigt werden kann.

Die nachfolgende Eingabe einer "2" führt zu einer gültigen Ortsvorwahl, nämlich zur Ortsvorwahl von Solingen. Da durch die Programmanwendung im Zuge des Durchlaufens des Entscheidungsbaumes erkannt wird, dass mit der Ziffernfolge "0212"eine gültige Ortnetzkennzahl vorliegt, werden die sich aus dem Nummernplan für Deutschland ergebenden Einschränkungen für die Eingabe einer regionalen Rufnummer bei eingegebener Vorwahl gesetzt. Wie bereits ausgeführt, besteht eine derartige Einschränkung darin, dass einer gültigen Ortsvorwahl weder die Landesausscheidungszahl "00" (das heißt ein Landespräfix) noch die Ortsausscheidungsziffer "0" (das heißt ein Ortspräfix) folgen kann.

Unabhängig davon, dass diese entsprechenden Einschränkungen gesetzt, also bei der weiteren Abarbeitung des Entscheidungsbaumes berücksichtigt werden, wird aber weiterhin geprüft, ob die Eingabe der nachfolgenden Ziffer (wie aus der Fig. 3 unter e) ersichtlich, sind mit Ausnahme der "0" alle Ziffern möglich) zu einer weiteren gültigen Vorwahl führt. In dem gezeigten Beispiel würde dies der Fall sein, wenn auf den unter e) gezeigten Zustand die Zifferntaste "9" betätigt wird.

Die Betätigung dieser Zifferntaste, also die Eingabe einer "9", führt nämlich zu der im deutschen Nummernplan gültigen Ortsvorwahl von Haan Rheinland. Demnach müsste bei dem unter e) in der Fig. 3 gezeigten Tastaturzustand die Zifferntaste "9" hervorgehoben werden, wenn dies nicht ohnehin schon der Fall wäre.

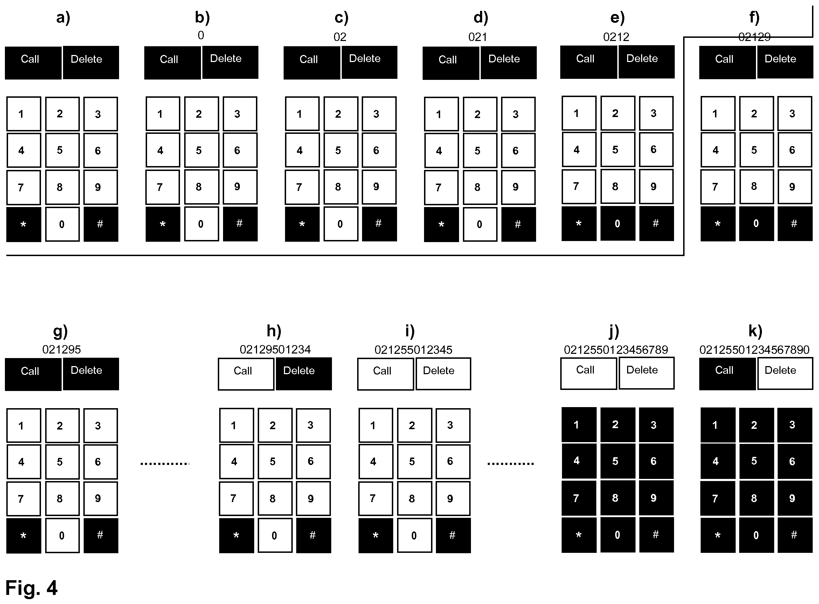

Eine mögliche Abwandlung des Eingabe- und Tastaturzustandsverlaufs gegenüber dem in der Fig. 3 gezeigten, nämlich einen Eingabe- und Tastaturzustandsverlauf wie er sich bei der Wahl einer Rufnummer im Ortsnetz Haan Rheinland, also bei einer Fortsetzung der Eingabe durch eine "9", ausgehend von dem in der Fig. 3 unter e) gezeigten Tastaturzustand, ergeben könnte, ist in der Fig. 4 dargestellt.

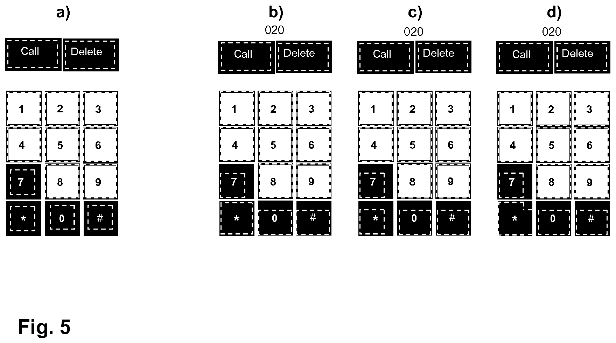

Wie bei der grundsätzlichen Beschreibung des erfindungsgemäßen Verfahrens bereits ausgeführt, kann bei einer virtuellen, beispielsweise auf einem berührungsempfindlichen Display dargestellten Tastatur die Eingabe einer Rufnummer neben der optischen Hervorhebung der Tasten, deren Betätigung weiterhin die Eingabe einer gültigen Rufnummer ermöglicht, noch dadurch unterstützt werden, dass bei den jeweils nicht optisch hervorgehobenen Tasten die tastsensitive beziehungsweise berührungsempfindliche Fläche reduziert wird. Beispiele hierfür werden durch die Fig. 5 veranschaulicht.

Eine erste insoweit gegebene Möglichkeit ist unter a) gezeigt. Demnach kann der tastsensitive Bereich derjenigen Tasten, deren Betätigung entsprechend dem Zustand d) der Fig. 1 nicht zu einer gültigen Eingabe führt, gleichmäßig, das heißt bezogen auf den Mittelpunkt einer jeweiligen Taste, reduziert werden. Dies wird in der Fig. 5 unter a) durch die gestrichelten Linien angedeutet. Der Nutzer der Tastatur wird dadurch, dass die betreffenden Tasten nur noch bezüglich eines verhältnismäßig kleinen Flächenbereichs tastsensitiv sind, von der Betätigung dieser nicht mehr zur Eingabe einer gültigen Rufnummer führenden Tasten gewissermaßen abgehalten.

Ein grundsätzlich gleicher Tastaturzustand ist in der Fig. 5 unter b) bis d) gezeigt. Abweichend gegenüber a) ist aber bei b) nur der tastsensitive Bereich derjenigen, nicht zur Eingabe einer gültigen Rufnummer führenden Tasten verkleinert, welche in horizontaler oder vertikaler Richtung an optisch hervorgehobene Tasten, also hier an Zifferntasten, die weiterhin zur Eingabe einer gültigen Rufnummer führen können, angrenzen. Die Verkleinerung der tastsensitiven Fläche erfolgt dabei ausgehend von den Seiten der betreffenden Tasten, welche an die hervorgehobenen Tasten angrenzen.

Eine Besonderheit stellen in diesem Fall diejenigen Tasten dar, die horizontal und vertikal ebenfalls nicht hervorgehobene Tasten als Nachtasten haben, bei denen aber diagonal angrenzende Taste hervorgehoben ist. Im Beispiel betrifft dies die mit "*" bezeichnete Taste. In diesen Fällen gibt es drei Lösungsvarianten. Die ersten beiden, in der Fig. 5 unter b) und c) gezeigten sind hinsichtlich der Ausbildung eines bei der Eingabe zu meidenden Korridors nicht ganz optimal, aber einfach zu berechnen. Gemäß der dritten, unter d) gezeigten Variante wird der Korridor unter besserer Anpassung an die Art der jeweils benachbarten Tasten (optisch hervorgehoben oder nicht) ausgebildet. Die geometrische Form des nicht tastsensitiven Bereiches ist dabei aber wesentlich komplexer und somit schwieriger zu berechnen.

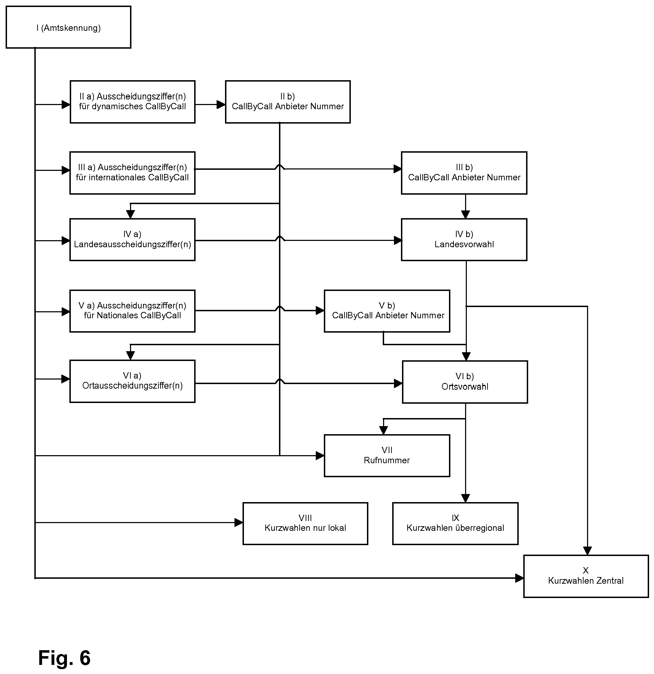

Die Fig. 6 zeigt in einer schematischen Darstellung ein Beispiel für die Abbildung eines Nummernplanes in einem Entscheidungsbaum. Demnach finden bei der Überprüfung einer jeweils erfolgten Tasteneingabe folgende Kategorien des Nummernplanes in dem Entscheidungsbaum Berücksichtigung.
- Amtsholung, optional - nur wenn eine Amtskennzahl notwendig ist, um externe Gespräche zu führen. Beispiel "0".
- Landesnetzkennzahl, eingeleitet durch eine Landesausscheidungszahl beziehungsweise den Landespräfix. Zur Ermittlung der Landesausscheidungszahl wird die Default Landesnetzkennzahl benötigt, da jedes Landesnetz eine andere Landesausscheidungszahl haben kann (Beispiel: Deutschland = 00, Russland = 810). Darauf folgt die Ortsnetzkennzahl ohne Ortsausscheidungsziffer.
- Ortsnetzkennzahl, eingeleitet durch eine Ortsausscheidungsziffer. Zur Ermittlung der Ortsausscheidungsziffer wird die Default Landeskennzahl benötigt, da jedes Landesnetz eine andere Ortsausscheidungsziffer haben kann (Beispiel: Deutschland = 0, Russland = 8).
   Darauf folgt die Ortsnetzkennzahl. Für diese Prüfung wird ebenfalls die Default Landesvorwahl benötigt, da jedes Land andere Systeme verwendet. (Mobilfunkrufnummern, das heißt Netzbetreiberkennzahlen für Mobilfunknetze, und Servicenummern werden in dieser Systematik auf der Ebene der Ortnetzkennzahlen mit abgebildet. Deren Ortsnetzkennzahl ist nicht geografisch sondern gewissermaßen einer Serviceart zugeordnet - siehe dazu die nationalen Rufnummernpläne bei der ITU: http://www.itu.int/oth/T0202.aspx?paren)t=T0202 und als Beispiel den für Deutschland: http://www.itu.int/oth/T0202000051/en,.
- Ein weiter Sonderfall sind CallByCall Anrufe. Hier wird für eine Verbindung ein anderer Operator in Anspruch genommen. Um diesen auszuwählen, wird eine CallByCall Ausscheidung gewählt. Gefolgt von der Rufnummer des Operators. Bei getrenntem nationalem und internationalem CallByCall, folgt anschließend die Landeskennzahl bei internationalem CallByCall oder die Ortsnetzkennzahl bei nationalem CallByCall (jeweils ohne Ausscheidungszahl). Bei dynamischem CallByCall werden die Ausscheidungsziffern für Land und Ort mitbenutzt, so dass dort mit einer Rufnummerngasse, sowohl international als auch nationale CallByCall-Anrufe initiiert werden können. Als Besonderheit kann es sogar möglich sein ohne weitere Vorwahlen direkt mit der Rufnummer im gleichen Ortsnetz CallByCall zu nutzen.
   Häufig wird CallByCall auch als Rufnummerngasse wie ein Ortsnetz abgebildet.
   Beispiel Deutschland: Dynamisches CallByCall im Festnetz mit "0110" und "011" gefolgt von zwei weiteren Ziffern für den Operator.
- Rufnummer, beginnt nicht mit einer der oben genannten Ausscheidungsziffern. Die minimale und maximale Länge wir für das jeweilige Ortsnetz individuell im Nummernplan festgelegt.
- Neben den Rufnummern existieren noch die Kurzwahlen. Dies ist eine feste Liste von Nummern, die nicht den sonstigen Minimallängen des Nummernplanes unterliegen. Beispiel 110 polizeilicher Notruf. Solche Kurzwahlen existieren mit beziehungsweise ohne Ortsvorwahl. Hinzukommen noch Kurzwahlen, die im Ortsnetz und mit der Landesvorwahl erreichbar sind (zum Beispiel 116116 - bundesweite Nummer zu Sperrung von Zahlkarten) - aber keine Ortsvorwahl enthalten.

Wichtig bei den aus der Fig. 6 nach der optionalen Amtskennung ersichtlichen 8 Verzweigungen ist es, dass diese parallel ausgewertet werden. Dies ist notwendig, da es sich während einer Eingabe nicht um eine vollständige Nummer handelt und mehrere Stränge Ergebnisse liefern von denen im Laufe weiterer Eingaben immer mehr herausfallen.

### Beispiel:

Die Eingabe 0 ist in Deutschland für alle II a, IV a und VI a gültig (III a und V a existieren so nicht und VII, VIII und X dürfen nicht mit einer 0 anfangen.) Damit dies funktioniert müssen die Funktionsblöcke eine zur Erkennung der jeweiligen Bestandteile einheitlich funktionieren:

Erkennt ein Funktionsblock beziehungsweise Knoten einen Bestandteil vollständig, so wird dieser aus der zu untersuchenden Eingabe entfernt und zentral als identifiziert hinterlegt. Die Entfernung ist notwendig, damit der nachfolgende Funktionsblock die restliche Eingabe unabhängig auf den folgenden Bestandteil prüfen kann.

### Beispiel:

Die Eingaben 00492035555 und 02035555 landen beide im Funktionsblock beziehungsweise Knoten VI b). Die erste Eingabe wird bei IV a) um 00 und bei IV b) um 49 gekürzt. Die zweite Eingabe wird bei VI a) um 0 gekürzt. Beide landen dann in VI b) wo die Eingabe um 203 gekürzt wird, die dann noch einmal unter VII (der parallele Versuch die vollständige Eingabe zu prüfen ist jeweils gescheitert, da Rufnummern in Deutschland nicht mit einer 0 anfangen dürfen) und unter IX getestet wird.

Zu bemerken ist, dass nur die finalen Funktionsblöcke (VII, VIII, IX, X) beziehungsweise Knoten zurückmelden können, ob eine Eingabe potentiell vollständig ist. Trotzdem verfügen die anderen Funktionsblöcke über eine erweiterte Rückmeldung, damit diese auch einzeln genutzt werden kann (zum Beispiel, zur Prüfung, ob eine Ortsnetzkennzahl gültig ist, ohne eine weitere Rufnummer anzugeben).

Für die Rückmeldung eines Funktionsblocks beziehungsweise Knotens müssen drei Fälle unterschieden werden:
a) Es ist kein gültiger Wert ermittelbar - es wird der Anteil der zu prüfenden Eingabe zurückgegeben, bis zu dem mindestens ein Wert potentiell gültig gewesen wäre. Dieser sequenzielle Strang endet hier.
b) Es ist genau ein Wert ermittelt - mindestens wird der gefundene Wert zurückgegeben und der nächste Funktionsblock aufgerufen. Die einzelnen Funktionsblöcke können aber noch weitere Informationen vorab zurückliefern, welche gegebenenfalls auf einem Display des Endgerätes ausgegeben werden können:

| Funktionsblock/Knoten | Beschreibung |
|---|---|
| II b), III B) und V b) | Wenn für das entsprechende Land nicht nur die Regeln für die CallByCall Anbieternummern, sondern auch eine Liste der CallByCall Anbieter hinterlegt ist, können Information zu dem gefunden Anbieter (Name, URL, Preise etc.) mit zurückgegeben werden. Zu beachten ist, dass diese Informationen sich häufig ändern können und damit ein häufiges Updaten verbunden ist - ungeeignet für Firmware, aber durchaus für Apps. |
| IV b) | Da die die Landesvorwahlen sich nicht häufig ändern und ihre Anzahl übersichtlich ist, kann im Rahmen des Verfahrens zur Erkennung direkt die Rückgabe von weiteren Angaben zu dem Land (Name, ISO-Code etc.) erfolgen. |
| VI b) | Neben den Ortsnetzen werden auch Service und Mobilfunkgassen über diese Prüfung abgebildet. Insofern sollte die Prüfung zurückliefern, ob es sich um eine Festnetzrufnummer, Servicerufnummer (gegebenenfalls unter Art: FreeCall, SharedCost oder PremiumRate etc.) oder Mobilfunknummer handelt. |
| | |
| | Da die Ortsvorwahlen sich nicht häufig ändern und ihre Anzahl von Ortsvorwahlnummern übersichtlich ist, kann im Rahmen des Verfahrens zur Erkennung direkt die Rückgabe von weiteren Angaben zu dem Ortsnetz (Typ, Name) zurückgegeben werden. Darüber hinaus können noch einmal die gleichen Informationen wie bei IV b) zurückgegeben werden, wenn VI b) über VI a) aufgerufen wird und damit das |
| | Default-Land angenommen wird. |
| | |
| | Neben dem Ortsnetz Namen können auch noch alternative Ortsnamen hinterlegt werden. Dies kann aus zwei Gründen sinnvoll sein, wenn: |
| | 1. in dünn besiedelten Gebieten mehrere Ortschaften (Dörfer, Gemeinden etc.) zu einem Ortsnetz zusammengefasst werden, so dass sich diese nicht im Namen des Ortsnetzes wiederfinden, |
| | 2. in dicht besiedelten Gebieten die Ortsnetze so nah aneinander sind, dass die Ortsnetzgrenzen nicht den Ortsgrenzen entsprechen. So kann die Versorgung am Rand eines Ortes vom Nachbarort erfolgen (zum Beispiel im Ruhrgebiet, in dem die Ortsgrenzen teilweise durch Häuserzeilen gehen). Beispielsweise ist die Ortsnetzkennzahl für Duisburg 203 auch in den Grenzgebieten von 5 Nachbarstätten - die eigene Ortsnetzkennzahlen haben vergeben. |
| | |
| | Da dies sehr umfangreich werden kann ist dies ähnlich wie die Informationen zu dem CallByCall-Anbieter Informationen zu handhaben. |
| VIII, IX und X | Wenn für das entsprechende Land nicht nur die Regeln für die Kurzwahl, sondern auch eine Liste der gültigen Kurzwahl hinterlegt ist, können Information zu dem Ziel (Name, URL, Preise etc.) mit zurückgegeben werden. |
| | Zu beachten ist für VIII und X: Sollte es sich dabei um die Prüfung direkt nach I handeln und das Default-Ortsnetz ist ein Mobilfunknetz, so kann diese Liste umfangreich sein und sich häufig ändern und damit häufiges Updaten erforderlich sein - ungeeignet für Firmware, aber durchaus für Apps. |

c. Die Eingabe ist zu kurz und es kann nicht ein gültiger Unterteil identifiziert werden. Es werden die Ziffern zurückgegeben, die weiterhin zu einer gültigen Eingabe führen würde. Dieser sequenzielle Strang endet hier.
Zusätzlich können weitere Informationen je nach Funktionsblock zurückgegeben werden zum Beispiel Typ der Rufnummer (beispielsweise ist die Ortsnetzkennzahl 17 nicht vollständig, aber alle Ergänzungen führen zu Mobilfunk-Netzkennzahlen).

Die Funktionsblöcke benötigen die Information über die Default-Werte (Amtskennung, Landesvorwahl und Ortsvorwahl). Ob in einem sequenziellen Strang bereits eine Landes- und/oder Ortsvorwahl entdeckt wurde (und wenn ja, welche).

Die Rückgabewerte werden im Laufe eines sequenziellen Stranges immer weiter eingeschränkt beziehungsweise vom letzten Funktionsblock gesetzt. Die Rückgabewerte der parallelen Stränge ergänzen sich:
- Rufnummerntypen werden allgemeiner (Servicenummer_Auskunft und Servicenummer-Freecall würden zur Servicenummer werden).
- Mögliche Ziffern würden ergänzt {0,1,2,3} und {2,3,4} würde zu {0,1,2,3,4}
- Anruftaste und Löschtaste bleiben aktiviert, wenn in einem Strang diese als möglich angegeben wird.

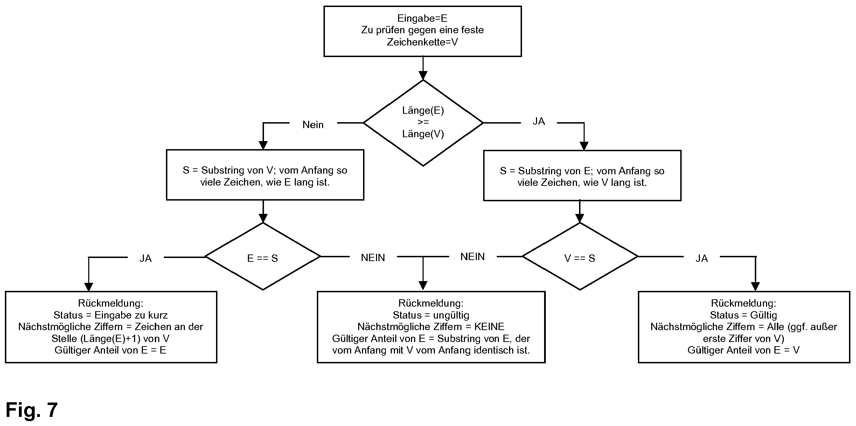

Bei der Prüfung der Eingabe gegen eine einzelne Nummernkette (I, II a, III a, IV a, V a, VI a) können ganz normale Funktionen zur Überprüfung von Zeichenketten verwendet werden, um zu den drei Ergebnissen zu gelangen. Hierfür zeigt die Fig. 7 den Ausschnitt eines entsprechenden Programmablaufplans,

In der Regel kann gegen eine Gruppe mit einem regulären Ausdruck geprüft werden. Allerdings wird dieser mit jeder Detailausnahme komplexer (zum Beispiel, wenn man alle über 5000 gültigen Vorwahlen Deutschlands versucht mit einem kompakten regulärem Ausdruck zu erfassen). Bei ungültigen Eingaben lässt sich mit einer zweiten Prüfung mit einer leichten Abwandlung dieses regulären Ausdrucks auch eine teilgültige Eingabe extrahieren. Problematisch ist es, die nächstmögliche Ziffer für eine gültige Eingabe zu ermitteln. Die Vorgehensweise, trivial jeweils alle 10 Ziffern hinzuzufügen und das Ergebnis zu prüfen, würde die Performance enorm verschlechtern.

Eine Validierung über eine Datenbank ist zwar gegebenenfalls performanter, aber nicht auf einfachen Systemen (in Browser beziehungsweise in Firmware) umzusetzen. Aus diesem Grund wird gemäß der Erfindung insbesondere für IV b) und VI b) eine besonders feste Codierung verwendet. Diese kann sogar unmittelbar aus den einzelnen Nummernplänen generiert werden.

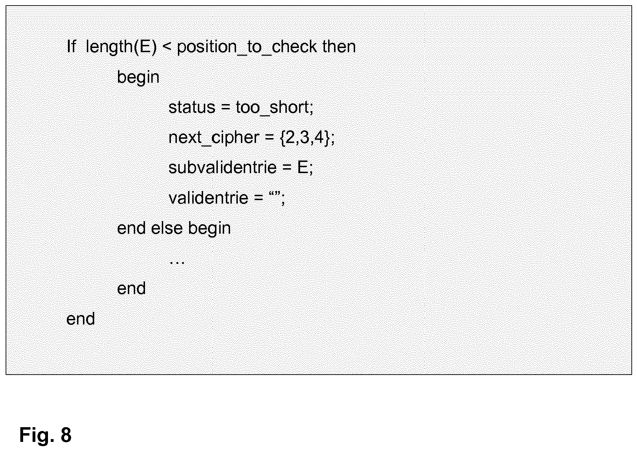

Die Figuren 8 bis 13 zeigen Codeauszüge für eine mögliche Umsetzung des Verfahrens unter Zugrundelegung des Entscheidungsbaumes nach Fig. 6 als Pseudo-Code. Erläuterungen hierzu sollen daher unter Bezug auf die letztgenannte Fig. 6 gegeben werden.

Jede Ziffer der Eingabe wird Schritt für Schritt geprüft. Um Fehler (Exceptions) bei der Zeichenkettenauswertung zu vermeiden, wird überprüft, ob die Zeichenkette überhaupt so viele Zeichen enthält, wie die Stelle die zu prüfen ist. Darüber hinaus können im negativen Fall direkt die an dieser Stelle gültigen nächsten Ziffern und die bis dahin teilweise gültige Eingabe zurückgeliefert werden. Die Fig. 8 zeigt hierfür einen möglichen Codeauszug der einen wesentlichen Bestandteil des erfindungsgemäßen Verfahrens ausbildenden Programmanwendung.

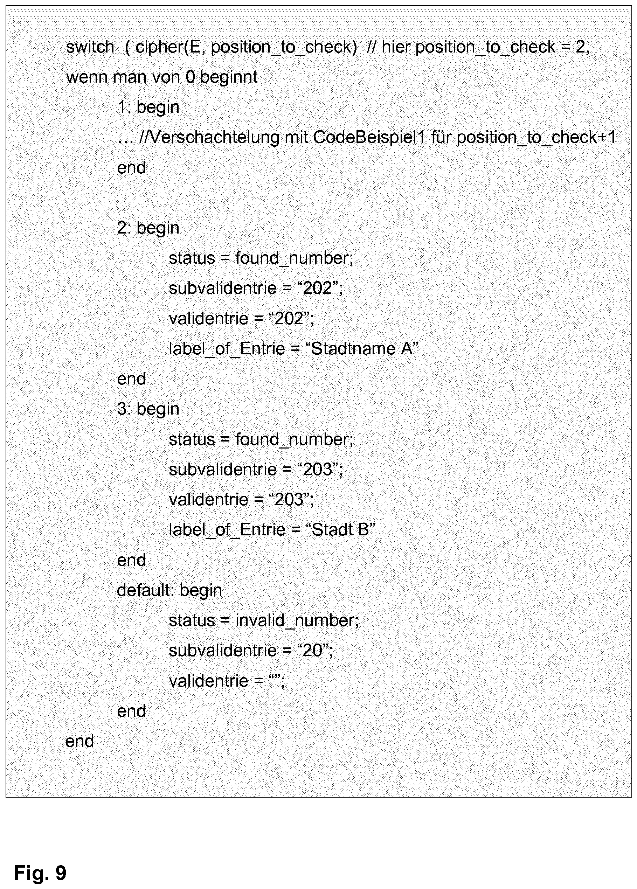

Die Ziffernprüfung wird im positiven Fall über eine Switch-Anweisung realisiert. Dabei werden die gültigen Ziffern in den Switch-Armen erfasst, wohingegen ungültige Ziffern durch den Default-Arm abgebildet werden. Im Default-Arm kann sofort die bis hierhin gültige Eingabe wiedergegeben werden. In den Switch Armen sind zwei wesentliche, in dem beispielhaften Codeauszug gemäß Fig. 9 erkennbare Fälle zu unterschieden:
a) Die Erkennung ist noch nicht beendet
   In diesem Fall wird eine weitere Stelle der Eingabe überprüft, sodass hier wieder mit Codefragmenten aus dem ersten Schritt eingefügt werden und eine Verschachtelung entsteht.
b) Die Erkennung ist beendet.
   In diesem Fall wird das Ergebnis gesetzt (nicht gleich der Eingabe, da diese ja länger sein kann. Auch eine Berechnung per Substring zur Position wäre nur Ressourcenverschwendung, da durch die Verschachtelung das Ergebnis eindeutig ist) - Erkannte Teilnummer und gegebenenfalls weitere Informationen (zum Beispiel Landesname bei IV b) oder Ortsnamen bei VI b) etc.)

Aus dem deutschen Nummernplan ist noch eine Besonderheit bekannt, gemäß welcher, wie bereits weiter oben erläutert, eine Vorwahl vollständig ist (Solingen = "212"), aber die Eingabe einer weiteren Ziffer zu einer Vorwahl für eine andere Stadt führt (Haan Rheinland = "2129"). Dieser Sonderfall mischt die beiden Hauptfälle.

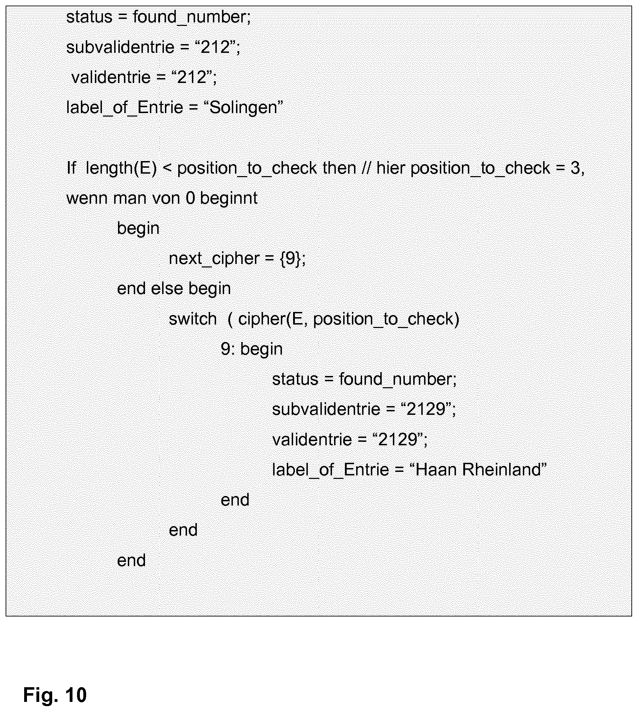

Zuerst wird das Ergebnis gesetzt. Für die weitere Ziffer wird dann eine Verschachtelung hinzugefügt, wobei es keinen Default-Arm mehr in der nächsten / den nächsten Verschachtelungstiefen gibt, da die Vorwahl ja bereits eine gültige Vorwahl erkannt wurde. Die Längenprüfen darf natürlich den bisherigen Treffer auch nicht zunichtemachen und nur noch die mögliche nächste Ziffer liefern (siehe hierzu Fig. 10 hinsichtlich einer möglichen programmtechnischen Kodierung).

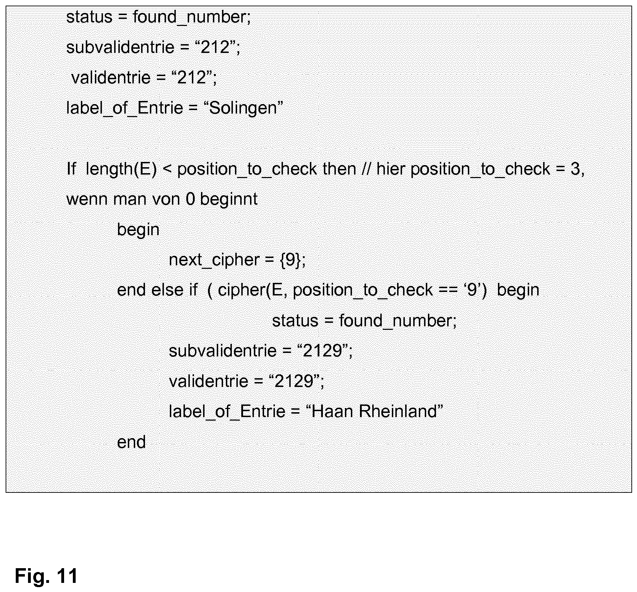

Alternativ kann, wie im Beispielcode gemäß Fig. 11 gezeigt, bei nur einem Switch-Arm auch eine IF-Abfrage gesetzt werden.

Der Rufnummernplan von Deutschland wurde entsprechend dieser Regel automatisch aus einer sortierten CSV-Datei (Comma Separated Values) in eine Objectiv-C Funktion übersetzt. Die zu generierende Syntax kann aber auch für eine beliebige Programmiersprache angepasst werden, die über synonyme Sprachelemente zu dem Pseudo-Code verfügt.

Weitere Informationen zum Typ der Rufnummer können ab der Verschachtelungstiefe eingefügt werden, ab der sich der Typ nicht mehr ändert, auch wenn noch nicht bis zum Ende ausgewertet wurde. So fangen alle Mobilfunknummern in Deutschland mit einer 15, 16 oder 17 an, auch wenn noch je zwei Ziffern folgen (von denen nicht alle zu einer gültigen Vorwahl führen). So kann man also schon ab der zweiten Switch Verschachtelung den Typ setzten, ohne dass die anderen Werte des Ergebnis gesetzt werden müssten.

Auch die Kurzwahlen (VIII, IX, X) und die CallByCall Anbieter (II b, III b, V b) können so hinterleget werden, was aber gegebenenfalls einen hohen Updateaufwand nach sich zieht, da sich diese Nummern häufiger ändern.

Um die Gültigkeit der Rufnummer (VII) oder auch die der Kurzwahlen (VIII, IX, X) beziehungsweise die der CallByCall-Anbieter (II b, III b, V b) - falls diese nicht wie oben beschrieben hinterlegt sind - zu überprüfen, gibt es noch zwei weitere Prüfmöglichkeiten:
1. Anfang ist nicht gleich Ausscheidungskette
   Der Beginn der Zeichenkette darf nicht mit einer Ausscheidungskette (II a, III a, IV a, V a, VI a) übereinstimmen. Zu beachten ist, dass dies für die gesamte Ausscheidungskette gilt und nicht nur für einzelne Teile. Wenn zum Beispiel die Ausscheidungsziffer für internationale Anrufe in einem Land die "555" wäre, könnte die "554" durchaus der Beginn einer Rufnummer sein - Die "555" aber nicht!

Die CallByCall Nummern (II b, III b, V b) können durch eine solche Regel nicht abgedeckt werden, da nach der Ausscheidungsziffer für CallByCall (II a, III a, V a) ein unabhängiger Nummernraum folgt.

Die Landesvorwahl (IV b) kann durch eine solche Regel ebenfalls nicht abgedeckt werden, da nach der Landesausscheidungszahl (IV a) ein unabhängiger Nummernraum folgt.

Auch die Kurzwahl überregional (IX) kann durch eine solche Regel nicht abgedeckt werden, da nach der Ortsvorwahl (VI b) ein unabhängiger Nummernraum folgt.

Für die Übrigen Rufnummernanteile lassen sich folgende Regeln ableiten:
Wenn die Ortsausscheidungsziffer (VI a) eine Unterteilmenge der Landesausscheidungszahl (IV a - vom Anfang an) ist, dann darf eine Ortsvorwahl (VI b) nicht mit den verbleibenden Ziffern der Landesausscheidungszahl beginnen.

### Beispiel 1:

In Deutschland ist die Landesausscheidungskette die "00" und die Ortsausscheidungskette die "0".

Eine Ortsvorwahl die mit einer "0" beginnt würde demnach mit der Ortsausscheidungskette wie die Landesausscheidungskette aussehen.

### Beispiel 2:

In Russland ist die Landesausscheidungskette die "810" und die Ortsausscheidungskette die "8". Eine Ortsvorwahl die mit "10" beginnt würde demnach mit der Ortsausscheidungskette wie die Landesausscheidungskette aussehen.

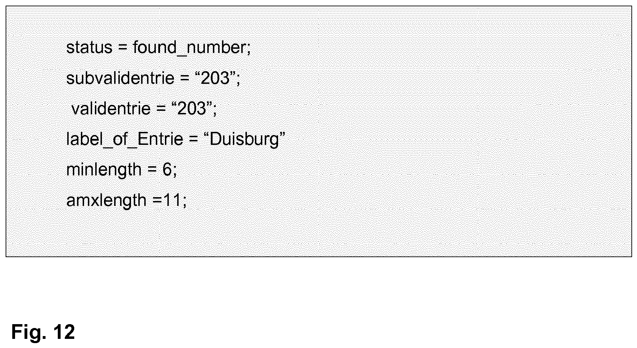

Eine Rufnummer (VII), eine Kurzwahl lokal (VIII) und eine Kurzwahl zentral (X) dürfen nicht mit der Ausscheidungsziffer (II a, III a, IV a, V a, VI a) beginnen.
2. Mindest- und Maximallänge entsprechend der Landes und Ortsnetzkennzahl.
   Anhand des Nummernplanes kann für die Rufnummern (VII) und Kurzwahlen (VII, IX, X) die Mindest- und Maximallänge ermittelt werden.
   Hierzu liefert zum Beispiel die Ortsvorwahl Auflösung diese Informationen zurück, so dass sich der Code wie in Fig. 12 gezeigt für die Rückmeldung einer Ortsvorwahl erweitert.
   Die Längenprüfung kann auch bei den CallbyCall Anbietern (II b, III b, V b) integriert sein, wobei dies dann zu einer festen Längenprüfung führt, damit danach zur nachfolgenden Prüfung gewechselt wird.
   Dabei kann es durchaus dynamische Längen geben, zum Beispiel, wenn die Anbieternummer mit "0" bis "3" Anfängt ist die Länge 2 ansonsten 3 Stellen lang.

Die einzelnen Funktionsblöcke können nicht ohne bestimmte Zusatzinformationen arbeiten. In der Regel werden diese durch Default-Vorbelegungen gesetzt beziehungsweise konfiguriert.

Ob und wenn ja welche Amtskennung (I) genutzt wird, muss hinterlegt sein. Die Ausscheidungsziffern (II a, III a, IV a, V a, VI a) können statisch hinterlegt sein oder besser anhand der Default-Landesvorwahl ermittelt werden, da Sie von dem jeweiligen Land mit seinem gültigem Nummernplan abhängen.

Die CallByCall-Anbieter (II b, III b, V b) können statisch hinterlegt sein oder besser anhand der Default-Landesvorwahl ermittelt werden, da auch Sie von dem jeweiligen Land mit seinem gültigem Nummernplan abhängen.

Die Gültigkeitsprüfung der lokalen Kurzwahl (VIII ist abhängig von dem angewähltem Ort und damit von der Default-Ortsvorwahl und Default-Landesvorwahl, wobei zum Beispiel die Ortsvorwahl "203" unter der Landeskennzahl "49", also in Deutschland mit anderen Regeln belegt ist, als unter der Landeskennzahl "44", also in Großbritannien).

Neben der Abhängigkeit von Default-Werten, gibt es auch Abhängigkeiten bei Werten, die durch einen in der Sequenz vorgelagerten Funktionsblock ermittelt wurden:
So ist die Gültigkeitsprüfung der Ortsvorwahl (VI b) abhängig von dem angewählten Land. Dieses ist das Land der Default-Landesvorwahl, wenn über VI a oder V b die Ortsvorwahl ermittelt wird. Oder dies ist die Landesvorwahl, die unter IV b ermittelt wurde, wenn die Ortsvorwahl Ermittlung nach IV b erfolgt.

Die Gültigkeitsprüfung der Rufnummer (VII) ist abhängig von dem angewähltem Ort. Dieser ist der Ort der Default-Ortsvorwahl und der Default-Landesvorwahl, wenn direkt nach I oder II b die Rufnummer ermittelt wird. Oder dies ist die Ortsvorwahl, die unter VI b ermittelt wurde, wenn die Rufnummernermittlung nach VI b erfolgt (das Land wird anhand der Landesvorwahl erkannt, die unter VI b genutzt wurde).

Die Gültigkeitsprüfung der überregionalen Kurzwahl (IX) ist abhängig von dem angewähltem Ort. Dies ist die Ortsvorwahl, die unter VI b ermittelt wurde. (Das Land wird anhand der Landesvorwahl erkannt, die unter VI b genutzt wurde.)

Die Gültigkeitsprüfung der zentralen Kurzwahl (X) ist abhängig von dem angewählten Land. Dieses ist das Land der Default-Landesvorwahl, wenn direkt nach I die Kurzwahl ermittelt wird. Oder dies ist die Landesvorwahl, die unter IV b ermittelt wurde, wenn die Kurzwahl Ermittlung nach IV b erfolgt.

Bei der Ermittlung der Ortsnetznamen (VI b) wird zwar für eine Ortsvorwahl der zugehörige Ortsnetzname zurückgeliefert. Allerdings können in einem dicht besiedeltem Gebiet die Ortsnetze so nah aneinander liegen, dass die Ortsnetzgrenzen nicht den Ortsgrenzen entsprechen. So kann die Versorgung am Rand eines Ortes vom Nachbarort erfolgen (zum Beispiel im Ruhrgebiet, in dem die Ortsgrenzen teilweise durch Häuserzeilen gehen). Beispielsweise ist die Ortsnetzkennzahl für Duisburg "203" auch in den Grenzgebieten von 5 Nachbarstätten, welche ansonsten, das heißt außerhalb dieser Grenzbereiche, eigene Ortsnetzkennzahlen haben, vergeben.

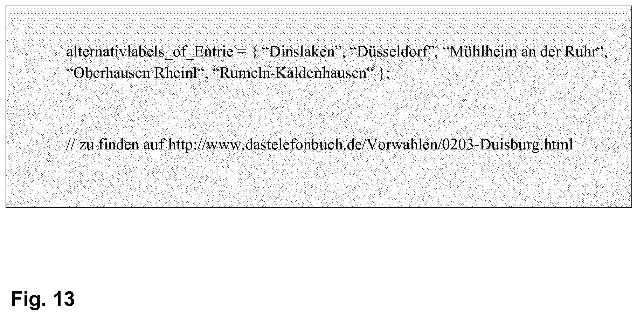

Insofern sollte hier ein zusätzliches Array übergeben werden, dass diese alternativen Bezeichnungen enthält. Dies wird beispielhaft durch die Fig. 13 verdeutlicht.

## Patentansprüche

1. Verfahren zur Unterstützung bei der Eingabe einer Rufnummer mittels einer Tastatur, nach welchem an einem entsprechend ausgebildeten mit einer Verarbeitungseinheit und einem Programmspeicher ausgestatteten Endgerät zumindest nach jeder Betätigung einer Zifferntaste der vorgenannten Tastatur zumindest bestimmte Zifferntasten dieser Tastatur hervorgehoben werden, nämlich entweder nur diejenigen Zifferntasten, deren Betätigung zusammen mit den bereits zuvor zur Eingabe der Rufnummer erfolgten Zifferneingaben eine Eingabeziffernfolge erzeugt, welche entsprechend eines Landesnetzkennzahlen und Ortsnetzkennzahlen berücksichtigenden Nummernplanes eine gültige Rufnummer oder einen Anfangsteil einer solchen gültigen Rufnummer darstellt oder aber nur diejenigen Zifferntasten, deren Betätigung nicht zu einer gültigen Rufnummer führt, **dadurch gekennzeichnet, dass** der Ermittlung der nach der Betätigung einer Taste jeweils hervorzuhebenden Zifferntasten ein Nummernplan zugrunde gelegt wird, in welchem durch die International Telecommunication Union, ITU, für die Bildung gültiger Rufnummern festgelegte Regeln niedergelegt sind und dass dieser Nummernplan als ein mehrstufiger Entscheidungsbaum in dem Endgerät abgebildet wird, welcher als unmittelbarer Bestandteil einer in dem Programmspeicher des Endgerätes gehaltenen, durch dessen Verarbeitungseinheit verarbeitbaren Programmanwendung kodiert wird.

2. Verfahren nach Anspruch 1, **dadurch gekennzeichnet, dass** aus durch das Endgerät verfügbar gemachten Kennzeichen oder Angaben die Landesnetzkennzahl und die Ortsnetzkennzahl des Netzes hergeleitet werden, mit welchem das für die Eingabe der Rufnummer genutzte Endgerät assoziiert ist.

3. Verfahren nach Anspruch 1 oder 2, **dadurch gekennzeichnet, dass** die hervorzuhebenden Zifferntasten in optischer Weise hervorgehoben werden.

4. Verfahren nach Anspruch 3, **dadurch gekennzeichnet dass** hervorzuhebende, physisch ausgebildete Zifferntasten, deren Betätigung zusammen mit den bereits zuvor zur Eingabe der Rufnummer erfolgten Zifferneingaben zu einer Eingabeziffernfolge führt, die eine gültige Rufnummer oder einen Anfangsteil einer solchen gültigen Rufnummer darstellt, einzeln beleuchtet werden.

5. Verfahren nach Anspruch 3, **dadurch gekennzeichnet, dass** bei einer virtuellen, in Form eines berührungsempfindlichen Displays ausgebildeten Tastatur, bei welcher jeweils diejenigen Zifferntasten optisch hervorgehoben werden, deren Betätigung zusammen mit den bereits zuvor zur Eingabe der Rufnummer erfolgten Zifferneingaben zu einer Eingabeziffernfolge führt, die eine gültige Rufnummer oder einen Anfangsteil einer solchen gültigen Rufnummer darstellt, gesteuert durch die in dem Programmspeicher gehaltene Programmanwendung die tastsensitive Fläche der jeweils nicht optisch hervorgehobenen Zifferntasten verkleinert wird.

6. Verfahren nach Anspruch 1 oder 2, **dadurch gekennzeichnet, dass** bei einem Endgerät, welches die Hinterlegung eines Kennzeichens ermöglicht, wonach vor der Eingabe einer Rufnummer die Eingabe eines Vorzeichens für eine Amtsholung erforderlich ist, eine Überprüfung des Status dieses Kennzeichens in den als Bestandteil der Programmanwendung kodierten, den Nummernplan abbildenden Entscheidungsbaum einbezogen wird.

7. Verfahren nach Anspruch 1 oder 6, **dadurch gekennzeichnet, dass** in dem in Form des in der Programmanwendung kodierten Entscheidungsbaumes abgebildeten Nummernplan und in den durch das Endgerät zu dem mit ihm assoziierten Netz verfügbar gemachten Kennzeichen als den Ortsnetzkennzahlen gleichgesetzte Netzbetreiberkennzahlen berücksichtigt werden.

8. Verfahren nach Anspruch 1 oder 7, **dadurch gekennzeichnet, dass** neben Zifferntasten, deren Betätigung zu einer Eingabeziffernfolge führt, die eine gültige Rufnummer oder einen Anfangsteil einer solchen gültigen Rufnummer darstellt, weitere nicht als Zifferntasten ausgebildete Tasten der Tastatur hervorgehoben werden, deren Betätigung zu einer gültigen Rufnummer führen kann oder die Verwendung der eingegebenen Ziffernfolge als gültige Rufnummer ermöglicht, wobei bei einem zum Rufaufbau unter Verwendung der eingegebenen Rufnummer geeigneten Endgerät eine Taste für den Rufaufbau hervorgehoben wird, sobald die aktuell eingegebene Ziffernfolge im Ergebnis des Durchlaufens des Entscheidungsbaumes als eine vollständige gültige Rufnummer erkannt wird.

9. Verfahren nach Anspruch 1 oder 8, **dadurch gekennzeichnet, dass** die hervorzuhebenden Tasten durch die Abgabe eines haptischen Feedbacks bei ihrer Berührung hervorgehoben werden.

10. Verfahren nach einem der Ansprüche 1 bis 9, **dadurch gekennzeichnet, dass** bei einem mit einem Display ausgestatten Endgerät aus über den Entscheidungsbaum erhaltenen Ergebnissen abgeleitete Zusatzinformationen auf dem Display ausgegeben werden.

11. Endgerät mit einer Verarbeitungseinheit, mit einem Programmspeicher und mit mindestens einer Zifferntasten zur Eingabe einer Rufnummer umfassenden Tastatur, derart ausgebildet, dass zumindest nach jeder zur Eingabe einer Rufnummer erfolgenden Betätigung einer Zifferntaste dieser mindestens einen Tastatur zumindest bestimmte Zifferntasten hervorgehoben werden, nämlich entweder nur diejenigen Zifferntasten, deren Betätigung zusammen mit den bereits zuvor zur Eingabe der Rufnummer erfolgten Zifferneingaben eine Eingabeziffernfolge erzeugt, welche entsprechend eines zumindest Landesnetzkennzahlen und Ortsnetzkennzahlen berücksichtigenden Nummernplanes eine gültige Rufnummer oder einen Anfangsteil einer solchen gültigen Rufnummer darstellt, oder aber nur diejenigen Zifferntasten, deren Betätigung nicht zu einer gültigen Rufnummer führt, **dadurch gekennzeichnet, dass** in dem Programmspeicher des Endgerätes eine von dessen Verarbeitungseinheit verarbeitbare Programmanwendung gehalten ist, in welcher als unmittelbar Bestandteil ein mehrstufiger Entscheidungsbaum kodiert ist, der den vorgenannten Nummernplan abbildet und der von der Programmanwendung bei jeder zur Eingabe einer Rufnummer erfolgenden Betätigung einer Taste der dafür vorgesehenen mindestens einen Tastatur zumindest zur Ermittlung der jeweils hervorzuhebenden Zifferntasten durchlaufen wird, wobei in dem als Entscheidungsbaum in dem Programmspeicher abgebildeten Nummernplan durch die International Telecommunication Union, ITU, für die Bildung gültiger Rufnummern festgelegte Regeln niedergelegt sind.

12. Endgerät nach Anspruch 11, **dadurch gekennzeichnet, dass** in einem Speicher des Endgerätes oder auf einer von dem Endgerät aufgenommenen Chipkarte Kennzeichen oder Angaben hinterlegt sind, aus denen durch die im Programspeicher des Endgerätes gehaltene Programmanwendung zumindest die Landesnetzkennzahl des Netzes herleitbar ist, mit welchem das für die Eingabe der Rufnummer genutzte, Endgerät assoziiert ist.

13. Endgerät nach Anspruch 11 oder 12, welches als ein Mobilfunkendgerät ausgebildet ist, **dadurch gekennzeichnet, dass** durch ein GPS-Modul des Endgerätes Angaben bereitgestellt werden, aus denen durch die im Programspeicher des Endgerätes gehaltene Programmanwendung zumindest die Ortsnetzkennzahl des Netzes herleitbar ist, mit welchem das für die Eingabe der Rufnummer genutzte, Endgerät assoziiert ist.

14. Endgerät nach Anspruch einem der Ansprüche 11 bis 13, **dadurch gekennzeichnet, dass** dieses mindestens ein berührungsempfindliches Display zur Darstellung einer Zifferntasten zur Eingabe einer Rufnummer umfassenden virtuellen Tastatur aufweist, bei welcher zumindest die Zifferntasten auf dem Display graphisch in unterschiedlicher Weise darstellbar sind.

15. Endgerät nach einem der Ansprüche 11 bis 13, **dadurch gekennzeichnet, dass** zumindest dessen die Eingabe einer Rufnummer ermöglichenden Zifferntasten seiner mindestens einen Tatstatur als einzeln beleuchtbare physische Tasten ausgebildet sind, wobei die Beleuchtung der bei der Eingabe einer Rufnummer jeweils hervorzuhebenden Tasten durch die den Entscheidungsbaum zur Abbildung des Nummernplan für gültige Rufnummern umfassende Programmanwendung gesteuert wird.

## Claims

1. Method for providing assistance when entering a telephone number by means of a keypad, whereby on an appropriately configured terminal device equipped with a processing unit and a programme memory, at least whenever a number key of aforementioned keypad is operated, at least certain number keys of this keypad are highlighted, namely either only those number keys which, when operated, together with the number entries already made previously in order to enter the telephone number, generate an entry number sequence representing a valid telephone number or an initial part of such a valid telephone number corresponding to a numbering plan taking account of country network codes and area network codes or alternatively only those number keys which, when operated, will not result in a valid telephone number, **characterised in that** the number keys to be highlighted respectively after operation of a key are determined on the basis of a numbering plan in which rules for forming valid telephone numbers laid down by the International Telecommunication Union, ITU, are set out and this numbering plan is represented in the terminal device as a multi-stage decision tree which is coded as a direct constituent part of a programme application held in the programme memory of the terminal device which can be processed by the processing unit thereof.

2. Method as claimed in claim 1, **characterised in that** the country network code and the area network code of the network with which the terminal device used to enter the telephone number is associated are derived from identification codes or data made available by the terminal device.

3. Method as claimed in claim 1 or 2, **characterised in that** the number keys to be highlighted are highlighted in an optical manner.

4. Method as claimed in claim 3, **characterised in that** physically configured number keys to be highlighted which, when operated, together with the number entries already made previously in order to enter the telephone number, result in an entry number sequence representing a valid telephone number or an initial part of such a valid telephone number are individually illuminated.

5. Method as claimed in claim 3, **characterised in that** in the case of a virtual keypad configured in the form of a touch-sensitive display in which respectively those number keys which, when operated, together with the number entries already made previously in order to enter the telephone number, result in an entry number sequence representing a valid telephone number or an initial part of such a valid telephone number are optically highlighted, and the touch-sensitive surface of the number keys that are respectively not optically highlighted is made smaller, being controlled by the programme application held in the programme memory.

6. Method as claimed in claim 1 or 2, **characterised in that** in the case of a terminal device which enables an identification code to be stored, whereby it is necessary to enter a prefix before entering a telephone number in order to access an outside line, a check on the status of this identification code is incorporated in the decision tree representing the numbering plan coded as a constituent part of the programme application.

7. Method as claimed in claim 1 or 6, **characterised in that** equated network operator codes are taken into account as the area network code in the numbering plan represented in the form of the decision tree coded in the programme application and in the identification code made available by the terminal device to the network associated with it.

8. Method as claimed in claim 1 or 7, **characterised in that** in addition to number keys which, when operated, result in an entry number sequence representing a valid telephone number or an initial part of such a valid telephone number, other keys of the keypad that are not configured as number keys which, when operated, can result in a valid telephone number or enable the use of the entered number sequence as a valid telephone number are highlighted, and in the case of a terminal device suitable for setting up a call using the entered telephone number, a key for setting up the call is highlighted as soon as the currently entered number sequence is recognised as a complete valid telephone number in the result obtained by searching the decision tree.

9. Method as claimed in claim 1 or 8, **characterised in that** the keys to be highlighted are highlighted by the output of a haptic feedback when they are touched.

10. Method as claimed in any one of claims 1 to 9, **characterised in that** in the case of a terminal device equipped with a display, additional information derived from results obtained via the decision tree is output on the display.

11. Terminal device having a processing unit, having a programme memory and having at least one keypad comprising number keys for entering a telephone number, which is configured such that
at least whenever a number key of this at least one keypad is operated in order to enter a telephone number, at least certain number keys are highlighted, namely either only those number keys which, when operated, together with the number entries already made previously in order to enter the telephone number generate an entry number sequence representing a valid telephone number or an initial part of such a valid telephone number corresponding to a numbering plan taking account of at least country network codes and area network codes or alternatively only those number keys which, when operated, will not result in a valid telephone number, **characterised in that**, in the programme memory of the terminal device a programme application that can be processed by the processing unit thereof is held, in which a multi-stage decision tree representing the aforementioned numbering plan is coded as a direct constituent part, and which is searched by the programme application whenever a key of the at least one keypad provided for this purpose is operated when entering a telephone number in order to at least determine the number keys to be respectively highlighted, and rules for forming valid telephone numbers laid down by the International Telecommunication Union, ITU, are set out in the numbering plan represented as a decision tree in the programme memory.

12. Terminal device as claimed in claim 11, **characterised in that** identification codes or data are stored in a memory of the terminal device or on a chip card housed by the terminal device, from which at least the country network code of the network with which the terminal device used to enter the telephone number is associated can be derived by the programme application held in the programme memory of the terminal device.

13. Terminal device as claimed in claim 11 or 12, provided in the form of a mobile terminal device, **characterised in that** data is made available by a GPS module of the terminal device, from which at least the area network code of the network with which the terminal device used to input the telephone number is associated can be derived by the programme application held in the programme memory of the terminal device.

14. Terminal device as claimed in any one of claims 11 to 13, **characterised in that** it has at least one touch-sensitive display for displaying a virtual keypad comprising number keys for entering a telephone number, whereby at least the number keys can be graphically displayed in different ways on the display.

15. Terminal device as claimed in any one of claims 11 to 13, **characterised in that** at least its number keys of its at least one keypad that enable a telephone number to be entered are configured as physical keys which can be individually illuminated, and illumination of the keys to be respectively highlighted when entering a telephone number is controlled by the programme application comprising the decision tree for representing the numbering plan for valid telephone numbers.

## Revendications

1. Procédé d'assistance lors de la saisie d'un numéro d'appel au moyen d'un clavier, selon lequel au moins certaines touches numériques du clavier sont mises en surbrillance au moins après chaque actionnement d'une touche numérique dudit clavier sur un terminal réalisé de manière correspondante et équipé d'une unité de traitement et d'une mémoire de programme, c'est-à-dire soit uniquement les touches numériques dont l'actionnement génère, en association avec les saisies de chiffres déjà effectuées pour la saisie du numéro d'appel, une série de chiffres de saisie qui représente un numéro d'appel valide correspondant à un indicatif de pays ou à un indicatif régional d'un plan de numérotation ou à une partie initiale d'un tel numéro d'appel valide, soit uniquement les touches numériques dont l'actionnement ne conduit pas à un numéro d'appel valide, **caractérisé en ce qu'**un plan de numérotation est utilisé comme base pour la détermination des touches numériques devant respectivement être mises en surbrillance après l'actionnement d'une touche, plan de numérotation dans lequel des règles établies par l'Union Internationale des Télécommunications, ITU, pour la création de numéros d'appel valides, ne sont pas appliquées et **en ce que** ledit plan de numérotation est représenté sous la forme d'un arbre de décision à plusieurs niveaux qui est codé en tant que partie intégrante d'une application de programme stockée dans la mémoire de programme du terminal et pouvant être traité par l'unité de traitement de ce dernier.

2. Procédé selon la revendication 1, **caractérisé en ce que** l'indicatif de pays et l'indicatif régional du réseau auquel est associé le terminal utilisé pour la saisie du numéro d'appel sont déduits d'identifiants ou de données rendus disponibles par le terminal.

3. Procédé selon la revendication 1 ou 2, **caractérisé en ce que** les touches numériques devant être mis en surbrillance sont mises en surbrillance de manière optique.

4. Procédé selon la revendication 3, **caractérisé en ce que** des touches numériques réalisées de manière physique et devant être mises en surbrillance, dont l'actionnement conduit, en association avec les saisies de chiffres déjà effectuées pour la saisie du numéro d'appel, à une série de chiffres de saisie qui représente un numéro d'appel valide ou une partie initiale d'un tel numéro d'appel valide, sont éclairées individuellement.

5. Procédé selon la revendication 3, **caractérisé en ce que**, dans le cas d'un clavier virtuel réalisé sous la forme d'un afficheur tactile, sur lequel les touches numériques dont l'actionnement conduit, en association avec les saisies de chiffres déjà effectuées pour la saisie du numéro d'appel, à une série de chiffres de saisie qui représente un numéro d'appel valide ou une partie initiale d'un tel numéro d'appel valide, sont mises en surbrillance de manière optique, la surface tactile des touches numériques non mises en surbrillance de manière optique est réduite de façon commandée par l'application de programme stockée dans la mémoire de programme.

6. Procédé selon la revendication 1 ou 2, **caractérisé en ce que**, dans le cas d'un terminal permettant le stockage d'un identifiant, selon lequel, avant la saisie d'un numéro d'appel, la saisie d'un indicatif destiné à un réseau public est exigée, une vérification de l'état dudit identifiant est prise en compte dans l'arbre de décision codé en tant que partie intégrante de l'application de programme et représentant le plan de numérotation.

7. Procédé selon la revendication 1 ou 6, **caractérisé en ce que**, dans le plan de numérotation représenté sous la forme de l'arbre de décision codé dans l'application de programme et dans l'identifiant rendu disponible par le terminal au réseau qui lui est associé, des indicatifs d'opérateur réseau assimilés aux indicatifs régionaux sont pris en compte.

8. Procédé selon la revendication 1 ou 7, **caractérisé en ce que**, outre les touches numériques dont l'actionnement conduit à une série de chiffres de saisie, qui représente un numéro d'appel valide ou une partie initiale d'un tel numéro d'appel valide, d'autres touches du clavier qui ne sont pas réalisées sous la forme de touches numériques sont mises en surbrillance, l'actionnement desdites touches pouvant conduire à un numéro d'appel valide ou permettant l'utilisation de la série de chiffres saisis en tant que numéro d'appel valide, dans lequel, dans le cas d'un terminal approprié pour l'établissement d'un appel par utilisation du numéro d'appel saisi, une touche destinée à l'établissement d'appel est mise en surbrillance dès que la série de chiffres actuellement saisie est identifiée dans le résultat du parcours de l'arbre de décision en tant que numéro d'appel entièrement avide.

9. Procédé selon la revendication 1 ou 8, **caractérisé en ce que** les touches devant être mises en surbrillance sont mises en surbrillance par fourniture d'une rétroaction haptique lorsqu'elles sont touchées.

10. Procédé selon l'une quelconque des revendications 1 à 9, **caractérisé en ce que**, dans le cas d'un terminal équipé d'un afficheur, des informations supplémentaires déduites de résultats obtenus par l'intermédiaire de l'arbre de décision sont fournies en sortie sur l'afficheur.

11. Terminal comportant une unité de traitement, une mémoire de programme, un clavier comprenant au moins une touche numérique destinée à la saisie d'un numéro d'appel, réalisé de manière à ce que :
au moins après chaque actionnement d'une touche numérique dudit au moins un clavier, effectué pour la saisie d'un numéro d'appel, au moins certaines touches numériques déterminées sont mises en surbrillance, c'est-à-dire soit uniquement les touches numériques dont l'actionnement produit une série de chiffres de saisie, en association avec les saisies de chiffres déjà effectuées pour la saisie du numéro d'appel, qui représentent un numéro d'appel valide ou une partie initiale d'un tel numéro d'appel valide correspondant à un plan de numérotation tenant compte au moins d'indicatifs de pays et d'indicatifs régionaux, soit uniquement les touches numériques dont l'actionnement ne conduit pas à un numéro d'appel valide, **caractérisé en ce qu'**une application de programme est stockée dans la mémoire de programme du terminal et peut être traitée par son unité de traitement, application de programme dans laquelle un arbre de décision à plusieurs niveaux représentant ledit plan de numérotation est codé en tant que partie intégrante, lequel arbre de décision est parcouru par l'application de programme lors de chaque actionnement d'une touche dudit au moins un clavier prévu à cet effet effectué pour la saisie d'un numéro d'appel, afin de déterminer les touches numériques devant être respectivement mises en surbrillance, dans lequel les règles établies par l'Union Internationale des Télécommunications, ITU, pour la création de numéro d'appel valide ne sont pas appliquées dans le plan de numérotation représenté sous la forme d'un arbre de décision dans la mémoire de programme.

12. Terminal selon la revendication 11, **caractérisé en ce que** des identifiants ou des données sont stockés dans une mémoire du terminal ou sur une carte à puce reçue dans le terminal, à partir desquels au moins un indicatif de pays du réseau peut être déduit par l'application de programme stockée dans la mémoire de programme du terminal, indicatif auquel est associé le terminal utilisé pour la saisie du numéro d'appel.

13. Terminal selon la revendication 11 ou 12, qui est réalisé sous la forme d'un terminal radio mobile, **caractérisé en ce que** des données sont fournies par l'intermédiaire d'un module GPS du terminal, à partir desquelles au moins l'indicatif régional du réseau peut être déduit par l'application de programme stockée dans la mémoire de programme du terminal, indicatif auquel est associé le terminal utilisé pour la saisie du numéro d'appel.

14. Terminal selon l'une quelconque des revendications 11 à 13, **caractérisé en ce qu'**il comporte au moins un afficheur tactile destiné à représenter une touche numérique permettant la saisie d'un numéro d'appel, comprenant un clavier virtuel, dans lequel au moins lesdites touches numériques peuvent être représentées graphiquement de différentes manières sur l'afficheur.

15. Terminal selon l'une quelconque des revendications 11 à 13, **caractérisé en ce qu'**au moins les touches numériques de son clavier qui permettent la saisie d'un numéro d'appel sont réalisées sous la forme de touches physiques pouvant être éclairées, dans lequel l'éclairage des touches devant être respectivement mises en surbrillance lors de la saisie d'un numéro d'appel est commandée par l'application de programme comprenant l'arbre de décision destiné à représenter le plan de numérotation pour des numéro d'appel valide.
